# EUROPÄISCHE PATENTSCHRIFT

(11) **EP 3 310 866 B1**
(45) Veröffentlichungstag und Bekanntmachung des Hinweises auf die Patenterteilung: **10.08.2022**
(21) Anmeldenummer: 16732476.3
(22) Anmeldetag: 08.06.2016
(51) Int. Cl.: C09J 133/08, C09J 133/06, C08F 220/18, C08G 71/04, C09J 175/04, B32B 7/12, C07D 317/34, B32B 7/00, B32B 27/00

(54) **COPOLYMERE AUS CYCLISCHEN EXO-VINYLENCARBONATACRYLATEN**
COPOLYMERS OF ACRYLATES OF CYCLIC EXO-VINYLEN CARBONATES
COPOLYMÈRES COMPOSÉS D'EXO-VINYLÈNE CARBONATACRYLATES CYCLIQUES

(30) Priorität: 18.06.2015 EP 15172703
(43) Veröffentlichungstag der Anmeldung: 25.04.2018
(73) Patentinhaber: BASF SE, 67056 Ludwigshafen (DE)
(72) Erfinder: LICHT, Ulrike, 68309 Mannheim (DE); SCHUMACHER, Karl-Heinz, 67433 Neustadt (DE); KLOPSCH, Rainer, 67551 Worms (DE); GHISLIERI, Diego, 64646 Heppenheim (DE)
(74) Vertreter: BASF IP Association
(86) Internationale Anmeldenummer: PCT/EP2016/062938
(87) Internationale Veröffentlichungsnummer: WO 2016/202652

(56) Entgegenhaltungen:
- WO-A1-2013/144299

## Beschreibung

Die Erfindung betrifft Copolymere aus (a) Monomeren M1 der Formel 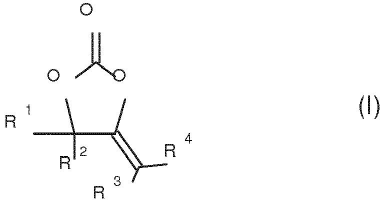 worin R¹ für einen organischen Rest mit einer (Meth)acrylgruppe steht,
R², R³ und R⁴ unabhängig voneinander für ein H-Atom oder eine C1- bis C10-Alkylgruppe stehen; und (b) von den Monomeren M1 verschiedenen, ethylenisch ungesättigten, radikalisch copolymerisierbaren Monomeren M2. Beschrieben werden auch Zweikomponenten Klebstoffe, welche die Copolymere und einen mehrfunktionellen Härter enthalten. Die Copolymere und die Zweikomponenten-Klebstoffe können als Laminierklebstoffe verwendet werden.

Als Kaschierklebstoffe (auch Laminierklebstoffe genannt) für flexible Lebensmittelverpackungen werden häufig zweikomponentige Systeme verwendet, in denen Isocyanatkomponenten mit Polyolkomponenten zu einem hochmolekularen Polymer reagieren. Diese Systeme werden entweder als lösemittelfreie und wasserfreie reaktive Einhundertprozentsysteme appliziert oder als in einem organischen Lösemittel gelöster Klebstoff. Die Klebstoffe werden mittels eines geeigneten Auftragssystems auf eine Kunstoff- oder Alufolie oder auch auf Papier aufgetragen und dann wird ggf. nach Verdampfen des Lösemittels eine zweite Folie unter Druck und ggf. erhöhter Temperatur zukaschiert. In einem solchen Prozess können Laminate hergestellt werden, die aus zwei oder mehreren Folien bzw. Papierlagen bestehen. Die in herkömmlichen Kaschierklebstoffen enthaltenen reaktiven Isocyanate stellen ein toxikologisches Risiko dar. Das betrifft zum einen die Verarbeitung dieser Klebstoffe bei der Laminatherstellung, weil die Isocyanate in der Regel eine hohe Toxizität und ein hohes allergenes Potential aufweisen. Zum anderen besteht die Gefahr, dass im flexiblen Verpackungslaminat nicht vollständig abreagiertes aromatisches Isocyanat durch die innere Folie ins verpackte Lebensmittel migriert und dort durch Wasseranteile im Lebensmittel zu carzinogenen aromatischen Aminen hydrolysiert.

WO 2011/157671 offenbart eine cyclische Carbonatverbindung mit einer Doppelbindung direkt am Ringsystem, welche auch als exo-Vinylencarbonat bezeichnet wird. Es werden keine cyclische exo-Vinylencarbonatverbindungen beschrieben, welche eine polymerisierbare Acrylatgruppe aufweisen.

Aus der US 2003/100687 sind 4-(Meth)acryloxyalkyl-1,3-dioxolan-2-one bekannt, die mit ethylenisch ungesättigten Comonomeren zu Copolymeren polymerisiert werden, welche über Alkyloxycarbonyl-Einheiten gebundene 1,3-Dioxolan-2-on-Gruppen aufweisen. Die Polymere werden mit aminischen Verbindungen umgesetzt, wobei man Pfropfpolymere erhält, die Urethan- und Hydroxylgruppen aufweisen. Die Pfropfpolymere werden in Beschichtungsmitteln eingesetzt. Verbindungen mit einer cyclischen Carbonatgruppe und mit einer polymerisierbaren Doppelbindung sind aus WO 2013/144299 bekannt. Die polymerisierbare Doppelbindung ist hier über einen Spacer an die exo-Vinylengruppe des exo-Vinylencarbonat der WO 2011/ 157671 gebunden. Die cyclischen Carbonatverbindungen der WO 2013/144299 werden polymerisiert und finden als Polymere beziehungsweise Copolymere verschiedenste Verwendungen. Für Verwendungen in Zweikomponenten-Klebstoffen sind die Reaktivitäten aber noch nicht völlig ausreichend.

Die Aufgabe der Erfindung bestand darin, einen geeigneten alternativen, isocyanatfreien Kaschierklebstoff für flexible Verpackungen zugänglich zu machen. Dieser Klebstoff sollte in der Lage sein, in einer kurzen Zeit hinreichend hohe Verbundfestigkeiten im Verpackungslaminat aufzubauen.

Es gelang dies durch die Copolymerisation von bestimmten exo-Vinylencarbonat-haltigen Acrylaten mit olefinische Doppelbindungen enthaltenden Comonomeren und Abmischungen dieser Copolymere mit einer mehrfunktionellen Härterkomponente. Der erfindungsgemäße Kaschierklebstoff kann als Lösung in einem organischen Lösemittel oder als lösemittel- und wasserfreies Einhundertprozentsystem appliziert werden.

Gegenstand der Erfindung sind Copolymere, gebildet durch radikalische Copolymerisation aus
(a) mindestens einem Monomeren M1 der Formel 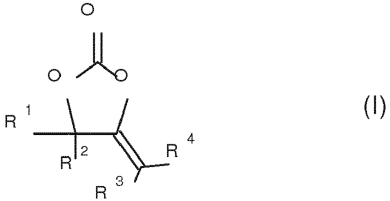 worin R¹ für einen organischen Rest mit einer (Meth)acrylgruppe steht, R², R³ und R⁴ unabhängig voneinander für ein H-Atom oder eine C1- bis C10-Alkylgruppe stehen; und
(b) mindestens einem, z.B. 1, 2, 3 oder mehr, von den Monomeren M1 verschiedenen, ethylenisch ungesättigten, radikalisch copolymerisierbaren Monomer M2.

Die Monomere M1 werden vorzugsweise in einer Menge von mindestens 1 Gew.% insbesondere wenigstens 5 Gew.-% oder wenigstens 10 Gew.-%, z.B. von 5 bis 50 Gew%, besonders bevorzugt von 15 bis 35 Gew% , bezogen auf die Gesamtmenge aller Monomere eingesetzt. Die Monomere M2 werden vorzugsweise in einer Menge 1 bis 99 Gew.% , besonders bevorzugt von 50 bis 95 Gew.% oder von 65 bis 85 Gew.-% bezogen auf die Gesamtmenge aller Monomere eingesetzt.

In Formel (I) steht R¹ für einen organischen Rest mit einer (Meth)acrylgruppe. R², R³ und R⁴ stehen unabhängig voneinander für ein H-Atom oder eine C1- bis C10-Alkylgruppe. Verbindungen der Formel I werden im Nachfolgenden auch als ExoVC-(meth)acrylate bezeichnet. Vorzugsweise steht R¹ für einen organischen Rest mit insgesamt maximal 24 C-Atomen, insbesondere maximal 18 C-Atomen und besonders bevorzugt maximal 14 C-Atomen. R¹ kann neben Sauerstoff weitere Heteroatome wie Stickstoff oder Schwefel enthalten.

In einer besonderen Ausführungsform besteht R¹ ausschließlich aus Kohlenstoff, Wasserstoff und Sauerstoff und enthält daher außer Sauerstoffatomen keine weiteren Heteroatome. Sauerstoffatome finden sich in der Acrylgruppe bzw. Methacrylgruppe, kurz (Meth)acrylgruppe und gegebenenfalls in weiteren funktionellen Gruppen wie Ethergruppen, Hydroxygruppen oder Carbonylgruppen. Insbesondere enthält R¹ Sauerstoff in der (Meth)acrylgruppe und darüber hinaus nur noch in gegebenenfalls vorhandenen Ethergruppen.

Besonders bevorzugt handelt es sich bei R¹ um eine der nachstehenden Gruppen der Formel (II), (III) oder (IV).

In Formel (II) 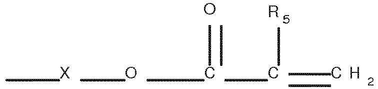 steht X für eine Bindung oder eine Alkylengruppe mit 1 bis 18 C-Atomen und R⁵ steht für ein H-Atom oder eine Methylgruppe. Vorzugsweise steht X für eine Alkylengruppe mit 1 bis 18 C-Atomen. Bei der Alkylengruppe kann es sich um eine lineare oder verzweigte Alkylengruppe handeln. Besonders bevorzugt handelt es sich um eine Alkylengruppe mit 1 bis 10 C-Atomen. Insbesondere handelt es sich um eine lineare C1- bis C10-Alkylengruppe. In einer besonderen Ausführungsform handelt es sich um eine lineare C2- bis C8-Alkylengruppe. Insbesondere handelt es sich um eine lineare C2- bis C6 Alkylengruppe, z.B. eine Ethylen-, n-Propylen oder n- Butylengruppe; ganz besonders bevorzugt ist X eine n-Propylengruppe.

In Formel (III) 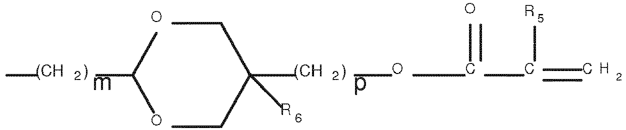 stehen m und p unabhängig voneinander für 0 oder eine ganze Zahl von 1 bis 10, R⁵ hat die obige Bedeutung und R⁶ steht für ein H-Atom oder eine C1- bis C10-Alkylgruppe. Vorzugsweise steht m für eine ganze Zahl von 1 bis 10, insbesondere für eine ganze Zahl von 1 bis 6, ganz besonders bevorzugt steht m für 1. Vorzugsweise steht p für 0 oder eine ganze Zahl von 1 bis 6, insbesondere steht p für eine ganze Zahl von 1 bis 6, ganz besonders bevorzugt steht p für 1. In einer besonderen Ausführungsform stehen m und p unabhängig voneinander für eine ganze Zahl von 1 bis 6. In einer ganz besonderen Ausführungsform stehen sowohl m als auch p für 1. R⁶ steht vorzugsweise für ein H-Atom oder eine C1- bis C6-Alkylgruppe. In einer besonderen Ausführungsform steht R⁶ für eine C1 bis C6- Alkylgruppe, zum Beispiel eine Methylgruppe oder Ethylgruppe, insbesondere eine Ethylgruppe.

In Formel (IV) 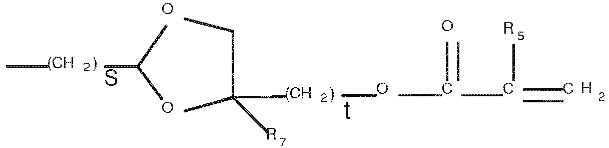 stehen s und t unabhängig voneinander für 0 oder eine ganze Zahl von 1 bis 10, R⁵ hat die obige Bedeutung und R⁷ steht für ein H-Atom oder eine C1- bis C10-Alkylgruppe. Vorzugsweise stehen s und t unabhängig voneinander für eine ganze Zahl von 1 bis 10, insbesondere eine ganze Zahl von 1 bis 6. In einer besonderen Ausführungsform stehen sowohl s als auch t für 1. R⁷ steht vorzugsweise für ein H-Atom oder eine C1- bis C6-Alkylgruppe. In einer besonderen Ausführungsform steht R⁷ für ein H-Atom.

In den Verbindungen der Formel I steht R² vorzugsweise für ein H-Atom oder eine C1- bis C6-Alkylgruppe. Insbesondere steht R² für eine C1- bis C6-Alkylgruppe, besonderes bevorzugt für eine Methylgruppe.

In den Verbindungen der Formel I stehen R³ und R⁴ unabhängig voneinander für ein H-Atom oder eine C1- bis C10-Alkylgruppe. Bei der Alkylgruppe handelt es sich insbesondere um eine C1- bis C6-Alkylgruppe, bevorzugt eine C1 bis C3-Alkylgruppe und in einer besonderen Ausführungsform um eine Methylgruppe.

Vorzugsweise steht mindestens einer der Reste R³ und R⁴ für ein H Atom. Besonders bevorzugt stehen sowohl R³ als auch R⁴ für ein H-Atom oder einer der R³ und R⁴ für ein H-Atom und der andere für eine Alkylgruppe, insbesondere eine Methyl- oder Ethylgruppe. Ganz besonders bevorzugt stehen sowohl R³ als auch R⁴ für ein H-Atom.

R5 steht vorzugsweise in allen Verbindungen der Formel I (bzw. der Formeln II bis IV) für ein H-Atom, es handelt sich daher bei Verbindungen der Formel I vorzugsweise um Acrylverbindungen.

Besonders bevorzugte Verbindungen der Formel I sind solche in denen es sich bei R¹ um eine Gruppe der Formel (II) oder (III), insbesondere um eine Gruppe der Formel (II) handelt.

Als Beispiele für Verbindungen der Formel (1) seien die folgenden bevorzugten Verbindungen genannt:
Verbindung der Formel I a: 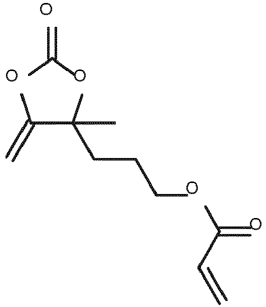
Verbindung der Formel I b: 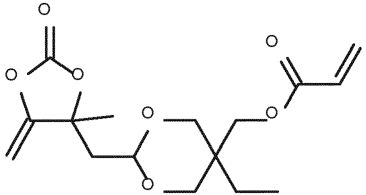
Verbindung der Formel I c: 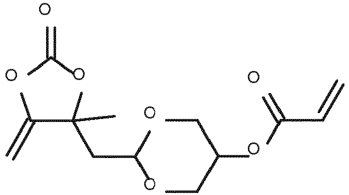
und Verbindung der Formel I d

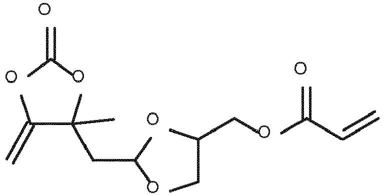

Herstellung von Verbindungen der Formel (I) mit R¹ = Formel (II):
Verbindungen der Formel (I) mit R¹ = Formel (II) können insbesondere durch ein Verfahren hergestellt werden, bei dem
- in einer ersten Stufe eine Verbindung mit einer endständigen Dreifachbindung mit einem Hydroxyalkanon oder Hydroxyalkanal umgesetzt wird, wobei sich die Dreifachbindung an die Carbonylgruppe des Hydroxyalkanon oder Hydroxyalkanal unter Ausbildung einer Dihydroxyverbindung addiert,
- in einer zweiten Stufe die Hydroxygruppe der erhaltenen Dihydroxyverbindung, welche nicht aus der Carbonylgruppe hervorgegangen ist, mit einer Schutzgruppe geschützt wird,
- in einer dritten Stufe mit Kohlendioxid der Ringschluss zur Carbonatgruppe erfolgt und
- in einer vierten Stufe die Schutzgruppe durch eine (Meth)acrylgruppe ersetzt wird.

### Zu Stufe 1:

Die Umsetzung der ersten Stufe ist eine an sich bekannte Addition von Dreifachbindungen an eine Carbonylgruppe. Geeignete Verbindungen mit einer endständigen Dreifachbindung sind insbesondere Verbindungen der Formel V

Y-CH≡CH,

wobei Y für ein H-Atom, eine Kohlenwasserstoffgruppe mit 1 bis 10 C- Atomen, z.B. eine Alkyl- oder Arylgruppe oder eine Schutzgruppe mit maximal 10 C-Atomen steht. Soweit es sich bei Y nicht um eine Schutzgruppe handelt, bestimmen die Substituenten des Y- substituierten C-Atoms die späteren Reste R3 und R4 in Formel I. Ausgehend von Formel V ist daher einer der Reste R3 oder R4 in Formel I ein H-Atom und der andere Y. Die bevorzugten Bedeutungen von Y entsprechen daher den obigen bevorzugten Bedeutungen von R3 bzw. R4.

Y kann jedoch auch für eine Schutzgruppe stehen. Schutzgruppen werden während oder nach der erfolgten Synthese wieder abgespalten, so dass in diesem Fall die späteren Reste R3 und R4 in Formel I beide für ein H-Atom stehen. Eine geeignete Schutzgruppe ist z.B. die Trimethylsilylgruppe (kurz TMS)

Bevorzugte Hydroxyalkanone oder Hydroxyalkanale sind Verbindungen der Formel VI 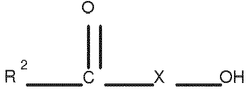 worin R2 für ein H-Atom oder eine C1- bis C10 Alkylgruppe steht. R2 entspricht dem R2 in Formel I; in einer bevorzugten Ausführungsform ist R2 eine Methylgruppe. X entspricht dem X in Formel II. Zu den bevorzugten Bedeutungen von R2 und X wurden bereits oben Ausführungen gemacht.

Zur Durchführung der Additionsreaktion sind verschiedene Methoden bekannt. Vorzugsweise werden die Ausgangsverbindungen in Gegenwart einer starken Base umgesetzt. Bevorzugte starke Basen sind Metallalkoholate. Es handelt sich dabei vorzugsweise um Metallsalze aliphatischer Alkohole, insbesondere Metallsalze von C1- bis C8-, vorzugsweise C2- bis C6- Alkoholen, wie Ethanol, n-Propanol, iso-Propanol, n-Butanol oder tertiär-Butanol. Bei den Metallkationen der Metallalkoholate handelt es sich vorzugsweise um Alkali-kationen, z.B. die Kationen von Natrium oder Kalium. Als bevorzugtes Metallalkoholat seien z.B. Kalium-tertiärbutylat, Natriumtertiärbutylat, Kaliumisopropylat und Natriumisopropylat genannt.

Die Umsetzung wird vorzugsweise in Gegenwart eines Lösemittels durchgeführt. Als Lösemittel bevorzugt sind inerte Lösemittel; diese enthalten keine reaktiven Gruppen, welche mit den Ausgangsverbindungen reagieren. Besonders bevorzugt sind inerte, polare, aprotische Lösemittel. Als solche genannt seien z.B. cyclische Etherverbindungen, insbesondere THF. Die Umsetzung ist im Allgemeinen exotherm, daher wird bei der Umsetzung vorzugsweise gekühlt. Die Temperatur des Reaktionsgemisches beträgt vorzugsweise maximal 50 °C, insbesondere maximal 25°C; vorzugsweise liegt sie zwischen 0 und 25°C.

Zur Aufarbeitung des erhaltenen Produktgemisches kann Wasser, gegebenenfalls Säure und gegebenenfalls ein unpolares organisches Lösemittel zugegeben. Soweit das Wertprodukt der 1.Stufe bereits eine eigenständige organische Phase ausbildet, kann auf das organische Lösemittel verzichtet werden. Es bilden sich zwei Phasen aus, von denen die organische Phase das Produkt der 1. Stufe (Additionsprodukte) enthält. Die organische Phase kann zur Entfernung von Wasser getrocknet werden. Lösemittel kann leicht destillativ abgetrennt werden. Das Produkt kann durch Vakuumdestillation in Reinform erhalten werden. Alternativ kann die Aufarbeitung auch nach üblichen Verfahren der Kristallisation oder Extraktion erfolgen, insbesondere wenn das Produkt der 1.Stufe einen sehr hohen Siedepunkt hat.

### Zu Stufe 2:

In der zweiten Stufe wird eine Hydroxygruppe der erhaltenen Dihydroxyverbindung mit einer Schutzgruppe geschützt. Die Hydroxygruppe, welche aus der Carbonylgruppe hervorgegangen ist, wird in der dritten Stufe mit CO₂ zum Carbonatring umgesetzt. Die schon vor der 1. Stufe vorhandene Hydroxygruppe der Ausgangsverbindung (kurz Ausgangs-Hydroxygruppe) wird geschützt, um Nebenreaktionen zu vermeiden.

Als Schutzgruppen geeignet sind insbesondere Estergruppen. Dazu wird die Ausgangs-Hydroxygruppe mit einer Säure oder einem Säurederivat umgesetzt. Bevorzugt ist die Umsetzung mit einer Carbonsäure, z.B. Ameisensäure oder Essigsäure, oder insbesondere mit einem Carbonsäurederivat, z.B. einem Carbonsäureanhydrid, Carbonsäurester oder Carbonsäurechlorid.

Die Ausgangs-Hydroxygruppe ist wesentlich reaktiver als die Hydroxygruppe, welche aus der Carbonylgruppe hervorgegangen ist. Daher bildet sich bei der Veresterung zunächst nur der Ester der Ausgangs-hydroxygruppe. Die Veresterung wird abgebrochen, bevor eine merkliche Esterbildung mit der anderen Hydroxygruppe beobachtet wird. Die Umsetzung kann durch Gaschromatographie kontrolliert werden.

Die Veresterung kann nach üblichen Verfahren durchgeführt werden. Bei der Umsetzung wird die Temperatur vorzugsweise nur langsam gesteigert, so dass das Fortschreiten der Esterbildung gut chromatographisch verfolgt werden und die Umsetzung rechtzeitig abgebrochen werden kann. Die Umsetzung kann z.B. bei Temperaturen von 0 bis 100°C erfolgen, vorzugsweise zwischen 0 und 40°C. Der erhaltene Ester kann durch Destillation gereinigt werden. Bei hohen Siedepunkten kommt auch eine Aufarbeitung und Reinigung durch Kristallisation oder Extraktion in Betracht.

### Zu Stufe 3:

In einer dritten Stufe erfolgt der Ringschluss mit Kohlendioxid zur Ausbildung der cyclischen Carbonatgruppe. Dazu wird Kohlendioxid vorzugsweise gasförmig oder in überkritischem Zustand unter Druck mit dem Ester in Kontakt gebracht. Die Umsetzung wird daher vorzugsweise in einem Autoklaven durchgeführt. Kohlendioxid kann auch in Gemisch mit Inertgas verwendet werden.

Die Umsetzung erfolgt vorzugsweise in Gegenwart von Katalysatoren. Vorzugsweise erfolgt sie in Gegenwart einer Base als Katalysator oder besonders bevorzugt in Gegenwart eines Katalysatorsystems aus einer Base und einem Metallsalz. Als Base sind Verbindungen mit mindestens einer tertiären Aminogruppe, z.B. mit ein bis drei tertiären Aminogruppen bevorzugt. Derartige Basen sind bekannt. Sie haben üblicherweise ein Molgewicht unter 500 g/mol, insbesondere unter 300 g/mol. Insbesondere handelt es sich dabei um aliphatische oder cycloaliphatische Verbindungen.

Als Basen genannt seien z.B.
TMTACN (N,N',N"-trimethyl-1,4,7-triazacyclononan),
PMDETA ( Pentamethyldiethylentriamin)
TMEDA (Tetramethylethylendiamin)
DBU (1,8-Diazabicyclo[5.4.0]undec-7-en) oder
DBN (1,5-Diazabicyclo[4.3.0]non-5-en).

Bei dem Metallsalz handelt es sich vorzugsweise um Salze mit ein bis drei wertigen Kationen, insbesondere Kationen des Cu, Ag oder Au. Das Anion der Metallsalze ist vorzugsweise ein Carboxylat, insbesondere ein C1- bis C6-Carboxylat. Als bevorzugte Metallsalze genannt seien Silberacetat oder Kupferacetat.

Als Katalysatoren kommen auch Phosphane in Betracht. Insbesondere handelt es sich dabei um Trialkyl- oder Triarylphosphane. Diese können allein oder ebenfalls in Kombination mit einem Metallsalz eingesetzt werden.

Die Umsetzung wird vorzugsweise bei einem Druck von 1 bis 100 bar, insbesondere 5 bis 70 bar durchgeführt. Die Temperatur des Reaktionsgemisches beträgt vorzugsweise 10 bis 100°C, insbesondere 10 bis 80°C. Die Umsetzung kann z.B. durch Gaschromatographie überwacht werden.

Nach Abkühlung und Druckentspannung kann das erhaltene Produkt (ExoVC-Ester) aufgearbeitet werden. Es kann ein organisches Lösemittel, vorzugsweise ein inertes, hydrophobes organisches Lösemittel wie Dichlormethan oder Toluol, und wässrige Säure, z.B. wässrige HCl, zugegeben werden, so dass sich zwei Phasen bilden. Die organische Phase enthält das gewünschte Produkt. Aus der organischen Phase kann Wasser durch Trocknung entfernt werden. Lösemittel kann destillativ entfernt werden. Das Produkt kann durch Destillation gereinigt werden. Eine schonende und daher bevorzugte Destillation ist z.B. die Destillation in einem Dünnschichtverdampfer. Insbesondere sind dazu Dünnschichtverdampfer mit Wischersystem geeignet. Alternativ kommt bei hohen Siedepunkten des Produkts der dritten Stufe auch eine Aufarbeitung und Reinigung durch Kristallisation oder Extraktion in Betracht.

### Zu Stufe 4:

In der 4. Stufe wird das in der dritten Stufe erhaltene, geschützte ExoVC, z.B. der ExoVC-ester, mit einer (Meth)acrylverbindung zum ExoVC-(meth)acrylat der Formel I umgesetzt. Als (Meth)-acrylverbindung wird insbesondere ein Alkyl(meth)acrylat, z.B. Methyl(meth)acrylat, verwendet. Die Schutzgruppe, hier das Formiat, wird durch die (Meth)acrylgruppe ersetzt, wobei das entsprechende Alkylformiat freigesetzt wird.

Diese Reaktion kann durch verschiedene Methoden durchgeführt werden, welche dem Fachmann bekannt sind. Vorzugsweise wird sie enzymatisch durchgeführt. Als Enzyme eignen sich dazu Lipasen. Lipasen katalysieren den Fettabbau bzw. Fettbildung aus Fettsäuren und Glycerin und eignen sich daher auch als Katalysatoren für Veresterungen bzw. Umesterungen oder entsprechende Umesterungsreaktionen, bei denen zwei Ester ihren aus der Veresterungsreaktion stammenden Rest des verwendeten Alkohols tauschen. Eine geeignete Lipase ist z.B. das Enzym Candida Antartica Lipase B. Die Lipasen werden vorzugsweise in einer immobilisierten Form verwendet. Immobilisierte Lipasen sind solche, die an einen Träger gebunden sind. Geeignete Träger sind natürliche organische Polymere wie Cellulose, synthetische organische Polymere wie Polystyrol oder anorganische Substanzen wie Tone oder Silikate.

Die enzymatisch katalysierte Reaktion kann z.B. bei einer Temperatur des Reaktionsgemisches von 0 bis 100°C, vorzugsweise 20 bis 80°C, besonderes bevorzugt 30 bis 60°C erfolgen. Die Umsetzung wird einfacherweise bei Normaldruck durchgeführt, eine Druckerhöhung oder -absenkung ist nicht notwendig, aber auch nicht nachteilig.

Bei der Reaktion handelt es sich um eine Gleichgewichtsreaktion. Die bei der Reaktion frei gesetzte Verbindung wird daher vorzugsweise dem Gemisch entzogen, sei es durch Abdestillieren, z.B. des freigesetzten Alkylformiats, oder auch durch Absorption, z.B. an einem Molekularsieb. Die Entfernung der frei gesetzten Verbindung kann kontinuierlich, z.B. durch ein dauerhaftes Vakuum erfolgen. Alternativ kann die Umsetzung nach einer bestimmten Zeit unterbrochen werden, um die frei gesetzte Verbindung zu entfernen, und danach wieder fortgesetzt werden. Abschließend kann das Enzym durch Filtration aus der Reaktionsmischung abgetrennt werden und die Mischung durch destillative Abtrennung der nicht umsetzten Ausgangsstoffe oder entstandenen Nebenprodukte gereinigt werden.

Die Umsetzung über alle vier Stufen verläuft insgesamt problemlos und in einfacher Weise und eignet sich daher auch für einen industriellen Maßstab. Das ExoVC-(meth)acrylat wird mit hoher Ausbeute und Selektivität erhalten. Eine schematische Darstellung der vier Stufen findet sich auch im Herstellungsbeispiel 2.1.

Herstellung von Verbindungen der Formel (I) mit R¹ = Formel (III)
Verbindungen der Formel (I) mit R¹ = Formel (III) können insbesondere durch Verfahren hergestellt werden, bei dem
- in einer ersten Stufe eine Verbindung mit einer endständigen Dreifachbindung mit einem Alkanon oder Alkanal, welches eine Acetalgruppe enthält, umgesetzt wird, wobei sich die Dreifachbindung an die Carbonylgruppe des Alkanon oder Alkanals unter Ausbildung einer Hydroxyverbindung addiert,
- in einer zweiten Stufe mit Kohlendioxid der Ringschluss zur Carbonatgruppe erfolgt,
- in einer dritten Stufe der Ringschluss zum 1,3-Dioxanring durch Umsetzung der Acetalgruppe mit einer Verbindung mit insgesamt mindestens drei Hydroxylgruppen wobei sich zwei der Hydroxylgruppen in 1,3 Stellung befinden, durchgeführt wird und
- in einer vierten Stufe die (Meth)acrylgruppe durch eine Veresterung oder Umesterung der verbleibenden Hydroxylgruppe eingeführt wird.

### Zu Stufe 1

Die Umsetzung der ersten Stufe ist eine an sich bekannte Addition von Dreifachbindungen an eine Carbonylgruppe. Geeignete Verbindungen mit einer endständigen Dreifachbindung sind insbesondere Verbindungen der Formel V, wie sie oben aufgeführt sind. Die obigen Ausführungen zu Formel V und den bevorzugten Verbindungen der Formel gelten hier entsprechend.

Die verwendeten Alkanone oder Alkanale enthalten eine Acetalgruppe. Bevorzugte Alkanone oder Alkanale mit einer Acetalgruppe sind solche der Formel VII 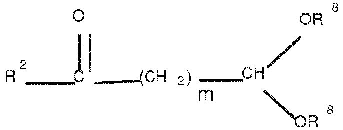 worin R² für ein H-Atom oder eine C1- bis C10 Alkylgruppe steht, m für 0 oder eine ganze Zahl von 1 bis 10 steht. m entspricht dem m in der obigen Formel III und hat die entsprechenden Bedeutungen und bevorzugten Bedeutungen. 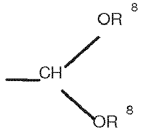 steht für die Acetalgruppe, wobei R⁸ eine Kohlenwasserstoffgruppe, insbesondere eine C₁- bis C₁₀-Alkylgruppe, besonders bevorzugt eine Methylgruppe, bedeutet. R² entspricht dem R² in Formel I und hat die entsprechenden Bedeutungen und bevorzugten Bedeutungen; in einer bevorzugten Ausführungsform ist R² eine Methylgruppe.

Zur Durchführung der Additionsreaktion gelten analog die obigen Ausführungen zur Stufe 1 bei der Herstellung von Verbindungen der Formel I mit R¹ = Formel II.

### Zu Stufe 2

In Stufe 2 erfolgt der Ringschluss. Hier gelten analog die obigen Ausführungen zur Stufe 3 bei der Herstellung von Verbindungen der Formel I mit R¹ = Formel II. Produkt der zweiten Stufe ist eine Verbindung mit einer cyclischen Carbonatgruppe und einer Acetalgruppe.

### Zu Stufe 3

In der 3. Stufe erfolgt der Ringschluss zum 1,3 Dioxanring. Dazu wird das Produkt der zweiten Stufe mit einer Verbindung mit insgesamt mindestens drei Hydroxylgruppen, vorzugsweise genau drei Hydroxylgruppen, wobei sich zwei der Hydroxylgruppen in 1,3 Stellung befinden, umgesetzt. Die beiden Hydroxylgruppen in 1,3 Stellung bilden durch Umsetzung mit der Acetalgruppe den 1,3 Dioxanring. Diese Umsetzung kann nach üblichen Methoden durchgeführt werden.

Bei der Verbindung mit den mindestens drei Hydroxylgruppen handelt es sich vorzugsweise um eine Verbindung der Formel VIII 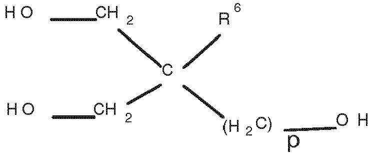 R⁶ und p entsprechen R⁶ und p in obiger Formel III und haben daher die entsprechenden Bedeutungen und bevorzugten Bedeutungen. Insbesondere handelt es sich bei der Verbindung der Formel VIII um Trimethylolpropan.

Die Umsetzung kann in Gegenwart oder Abwesenheit von Lösemittel durchgeführt werden. Vorzugsweise erfolgt sie in Gegenwart von Lösemittel. Das Lösemittel wird dabei vorzugsweise so gewählt, dass alle Ausgangsstoffe möglichst vollständig gelöst werden. Bei der Umsetzung wird der Alkohol HO-R⁸ abgespalten, insbesondere handelt es sich dabei um Methanol. Bei Verwendung eines hochsiedenden Lösemittels wie Toluol kann Methanol leicht destillativ entfernt werden. Der Alkohol HO-R⁸, insbesondere Methanol, kann jedoch auch in der Reaktionsmischung verbleiben; daher sind auch Lösemittel mit tieferem Siedepunkt oder polare Lösemittel, wie Acetonitril geeignet.

Vorzugsweise erfolgt die Umsetzung in Gegenwart von Katalysatoren. Als Katalysatoren geeignet sind z.B. organische oder anorganische Säuren. Genannt seien exemplarisch Methansulfonsäure und p-Toluolsulfonsäure.

Das bei der Umsetzung verwendete Lösemittel kann gegebenenfalls vor der weiteren Aufarbeitung entfernt werden. Die Aufarbeitung kann wiederum durch eine Phasentrennung erfolgen.

Dazu wird ein geeignetes Lösemittel, welches das Wertprodukt der 3. Stufe möglichst vollständig löst und mit Wasser nicht mischbar ist zugegeben. Als Lösemittel kommen z.B. Toluol oder MTBE (Methyltertiärbutylether) in Betracht. Die erhaltene organische Phase kann mit Wasser einmal oder mehrfach gewaschen werden. Die wässrige Phase wird jeweils verworfen. Die organische Phase kann durch Destillation oder Kristallisation gereinigt werden.

### Zur 4. Stufe

In der 4. Stufe wird schließlich die Verbindung der Formel I mit R¹= Formel III durch eine Umesterung erhalten. Diese 4. Stufe entspricht der 4. Stufe bei der Herstellung von Verbindungen der Formel I mit R¹ = Formel II, nur mit dem Unterschied, dass hier nicht von einem geschützten Alkohol ausgegangen wird, sondern von einem ungeschützten. Es gelten daher alle diesbezüglichen obigen Ausführungen entsprechend.

Eine schematische Darstellung der vier Stufen findet sich auch im Herstellungsbeispiel.

In einer alternativen Verfahrensweise könnte man die Reihenfolge der Stufen ändern und z.B. die Reihenfolge der Stufen 2 und 3 umkehren, so dass sich die Reihenfolge 1-3-2-4 der vorstehenden Stufen ergibt. Dann würde zunächst die Umacetalisierung mit der Verbindung der Formel VIII durchgeführt. Vorzugsweise wird dabei die dritte Hydroxylgruppe der Verbindung VIII, welche an der Umacetalisierung nicht teilnehmen soll, durch eine Schutzgruppe geschützt. Erst danach erfolgt dann der Ringschluss mit CO₂.

Bevorzugt ist jedoch die obige, numerische Reihenfolge der Stufen von Stufe 1, über Stufe 2, dann 3 zu Stufe 4.

Herstellung von Verbindungen der Formel (I) mit R¹ = Formel (IV)
Verbindungen der Formel (I) mit R¹ = Formel (IV) können insbesondere durch Verfahren hergestellt werden, bei dem
- in einer ersten Stufe eine Verbindung mit einer endständigen Dreifachbindung mit einem Alkanon oder Alkanal, welches eine Acetalgruppe enthält, umgesetzt wird, wobei sich die Dreifachbindung an die Carbonylgruppe des Alkanon oder Alkanals unter Ausbildung einer Hydroxyverbindung addiert,
- in einer zweiten Stufe mit Kohlendioxid der Ringschluss zur Carbonatgruppe erfolgt,
- in einer dritten Stufe der Ringschluss zum 1,3-Dioxolanring durch Umsetzung der Acetalgruppe mit einer Verbindung mit insgesamt mindestens drei Hydroxylgruppen wobei sich zwei der Hydroxylgruppen in 1,2 Stellung befinden, durchgeführt wird und
- in einer vierten Stufe die (Meth)acrylgruppe durch eine Veresterung oder Umesterung der verbleibenden Hydroxylgruppe eingeführt wird.

Diese vier Stufen entsprechen den vier Stufen bei der vorstehend beschriebenen Herstellung von Verbindungen der Formel I mit R¹= Formel III. daher gelten die vorstehenden Ausführungen zur Herstellung von Verbindungen der Formel I mit R¹= Formel III entsprechend, soweit im Folgenden nichts anderes festgestellt wird. Der wesentliche Unterschied besteht naturgemäß in der Wahl der Verbindung mit den mindestens drei Hydroxygruppen in der 3. Stufe, da ein 1,3 Dioxolanring (Fünfring) statt eines 1,3 Dioxanrings (Sechsring) hergestellt wird. Entsprechend stehen zwei der Hydroxylgruppen der Verbindung in 1,2 Stellung. Eine bevorzugte Verbindung mit drei derartige Hydroxylgruppen ist Glycerin.

Geeignete Monomere M2 (Comonomere) sind vor allem monoethylenisch ungesättigte Comonomere, aber auch konjugiert diethylenisch ungesättigte Verbindungen. Zu den Comonomeren M2 zählen beispielsweise:
- b1: monoethylenisch ungesättigte C₃-C₈-Mono- und C₄-C₈-Dicarbonsäuren wie z.B. Acrylsäure, Methacrylsäure, Vinylessigsäure, Crotonsäure, Fumarsäure, Maleinsäure und Itaconsäure;
- b2: Amide monoethylenisch ungesättigter C₃-C₈-Mono- und C₄-C₈-Dicarbonsäuren wie Acrylamid, Methacrylamid, Fumarsäureamid und Maleinimid;
- b3: Anhydride monoethylenisch ungesättigter C₄-C₈-Dicarbonsäuren wie Maleinsäureanhydrid;
- .b4: Hydroxy-C₂-C₄-alkylester monoethylenisch ungesättigter C₃-C₈-Mono- und C₄-C₈-Dicarbonsäuren wie 2-Hydroxyethylacrylat, 2-Hydroxypropylacrylat, 3-Hydroxypropylacrylat, 2-Hydroxybutylacrylat, 4-Hydroxybutylacrylat, 2-Hydroxyethylmethacrylat, 2-Hydroxy-propylmethacrylat, 3-Hydroxypropylmethacrylat, 2-Hydroxybutylmethacrylat, 4-Hydroxy-butylmethacrylat;
- b5: monoethylenisch ungesättigte Sulfonsäuren und deren Salze, z. B. Vinylsulfonsäure, Allylsulfonsäure, Methallylsulfonsäure, Styrolsulfonsäure, 2-Acrylamido-2-methylpropan-sulfonsäure, 2-Methacrylamido-2-methylpropansulfonsäure, 2-Acrylamidoethansulfonsäure, 2-Methacrylamidoethansulfonsäure, 2-Acryloxyethansulfonsäure, 2-Methacryloxyethansulfonsäure, 3-Acryloxypropansulfonsäure und 2-Methacryloxypropansulfonsäure;
- b6: monoethylenisch ungesättigte Nitrile mit 3 bis 5 C-Atomen wie Acrylnitril und Methacrylnitril;
- b7: N-Vinylheterocyclen wie N-Vinylpyrrolidon, N-Vinylcaprolactam, N-Vinylimidazol;
- b8: monoethylenisch ungesättigte Verbindungen mit wenigstens einer Poly-C₂-C₄-alkylenoxid-Gruppe, beispielsweise Vinyl- und Allylether von Poly-C₂-C₄-alkylenglykolen oder C₁-C₁₀-Alkyl-poly-C₂-C₄-alkylenglykolen, Ester monoethylenisch ungesättigter Mono- und Dicarbonsäuren mit 3 bis 8 C-Atomen mit Poly-C₂-C₄-alkylenglykolen oder C₁-C₁₀-Alkyl-poly-C₂-C₄-alkylenglykolen;
- b9: vinylaromatische Kohlenwasserstoffe wie Styrol, α-Methylstyrol und die Vinyltoluolisomere;
- b10: Ester monoethylenisch ungesättigter C₃-C₈-Monocarbonsäuren mit C₁-C₂₀-Alkanolen, C₅-C₈-Cycloalkanolen, Phenyl-C₁-C₄-alkanolen oder Phenoxy-C₁-C₄-alkanolen, z.B. Ester der Acrylsäure mit C₁-C₂₀-Alkanolen wie Methylacrylat, Ethylacrylat, n-Butylacrylat, 2-Butylacrylat, Isobutylacrylat, tert.-Butylacrylat, 2-Ethylhexylacrylat, Decylacrylat, Laurylacrylat und Stearylacrylat, Ester der Acrylsäure mit C₅-C₁₀-Cycloalkanolen wie Cyclohexylacrylat, Ester der Acrylsäure mit Phenyl-C₁-C₄-alkanolen wie Benzylacrylat, 2-Phenylethylacrylat und 1-Phenylethylacrylat, Ester der Acrylsäure mit Phenoxy-C₁-C₄-alkanolen wie 2-Phenoxyethylacrylat, Ester der Methacrylsäure mit C₁-C₂₀-Alkanolen, vorzugsweise C₁-C₁₀-Al-kanolen, wie Methylmethacrylat, Ethylmethacrylat, n-Butylmethacrylat, 2-Butylmethacrylat, Isobutylmethacrylat, tert.-Butylmethacrylat, 2-Ethylhexylmethacrylat, Decylmethacrylat, Laurylmethacrylat und Stearylmethacrylat, Ester der Methacrylsäure mit C₅-C₁₀-Cyclo-alkanolen wie Cyclohexylmethacrylat, Ester der Methacrylsäure mit Phenyl-C₁-C₄-alka-nolen wie Benzylmethacrylat, 2-Phenylethylmethacrylat und 1-Phenylethylmethacrylat und Ester der Methacrylsäure mit Phenoxy-C₁-C₄-alkanolen wie 2-Phenoxyethylmethacrylat;
- b11: Diester monoethylenisch ungesättigter C₄-C₈-Dicarbonsäuren mit C₁-C₂₀-Alkanolen, C₅-C₈-Cycloalkanolen, Phenyl-C₁-C₄-alkanolen oder Phenoxy-C₁-C₄-alkanolen;
- b12: C₁-C₂₀-Alkylamide und Di-C₁-C₂₀-alkylamide monoethylenisch ungesättigter C₃-C₈-Monocarbonsäuren, insbesondere die C₁-C₂₀-Alkylamide und Di-C₁-C₂₀-alkylamide der Acrylsäure und der Methacrylsäure, z. B. Ethylacrylamid, Dimethylacrylamid, Diethylacrylamid, n-Propylacrylamid, n-Butylacrylamid, Laurylacrylamid, Stearylacrylamid, Ethylmethacrylamid, Dimethylmethacrylamid, Diethylmethacrylamid, n-Propylmethacrylamid, n-Butyl-methacrylamid, Laurylmethacrylamid, Stearylmethacrylamid;
- b13: Vinylester aliphatischer Carbonsäuren mit 1 bis 20 C-Atomen, z. B. Vinylacetat, Vinylpropionat, Vinylbutyrat, Vinylhexanoat, Vinyllaurat und Vinylstearat;
- b14: konjugiert diethylenisch ungesättigte C₄-C₁₀-Olefine wie Butadien und Isopren;
- b15: C₂-C₂₀-Olefine wie Ethylen, Propen, 1-Buten, 2-Buten, Isobuten, 1-Hexen, 1-Octen, Diisobuten und 1-Decen;
- b16: halogensubstituierte C₂-C₂₀-Olefine wie Vinylchlorid, Vinylidenchlorid, Vinylbromid, Fluorethen, 1,1-Difluorethen und Tetrafluorethen;
- b17: monoethylenisch ungesättigte Monomere, die eine oder zwei Epoxidgruppen aufweisen, wie Mono- und Diester von monoethylenisch ungesättigten Mono- oder Dicarbonsäuren, insbesondere Mono- und Diester von C₃-C₁₀-Epoxyalkanolen, z. B. Mono- oder Diglycidylester monoethylenisch ungesättigter C₃-C₈-Mono- oder C₄-C₈-Dicarbonsäuren wie Glycidylacrylat und Glycidylmethacrylat, oder monoethylenisch ungesättigte Ether von C₃-C₁₀-Epoxyalkanolen, insbesondere Allyl- oder Methallylether, z. B. Allylglycidylether und Methallylglycidylether;
- b18: monoethylenisch ungesättigte Monomere, die wenigstens eine Carbonatgruppe, insbesondere eine cyclische Carbonatgruppe, z.B. eine 1,3-Dioxolan-2-on-Gruppe oder 4-Methyl-1,3-dioxolan-2-on-Gruppe, aufweisen, z.B. Propylencarbonat-acrylat ([1,3-Dioxolan-2-on-4-yl]methylacrylat) oder Propylencarbonat-methacrylat ([1,3-Dioxolan-2-on-4-yl]-methylmethacrylat);
- b19: Ester monoethylenisch ungesättigter C₃-C₈-Monocarbonsäuren oder monoethylenisch ungesättigter C₄-C₈-Dicarbonsäuren mit C₈-C₂₄-Alkenolen oder C₈-C₂₄-Alkandienolen, insbesondere die Ester der Acrylsäure oder der Methacrylsäure, wie beispielsweise Oleylacrylat, Oleylmethacrylat, Linolylacrylat oder Linolylmethacrylat.

Bevorzugte Monomere M2 sind solche der Gruppen b9 (vorzugsweise vinylaromatische Kohlenwasserstoffe, speziell Styrol), b10 (vorzugsweise Ester der Acrylsäure oder der Methacrylsäure mit C₁-C₂₀-Alkoholen, z.B. n-Butylacrylat, 2-Ethylhexylacrylat, Methylacrylat und Methylmethacrylat), b13 (vorzugsweise Vinylacetat) und b14 (vorzugsweise Butadien).

Sofern das erfindungsgemäße Polymer wenigstens ein Monomer M2 der Gruppen b9 und b10, einpolymerisiert enthält, umfassen die zu polymerisierenden Monomere M1 vorzugsweise 1 bis 99 Gew.-%, insbesondere 5 bis 95 Gew.-% und speziell 10 bis 90 Gew.-% wenigstens einer Verbindung der Formel I und 1 bis 99 Gew.-%, insbesondere 5 bis 95 Gew.-% und speziell 10 bis 90 Gew.-% wenigstens eines, vorzugsweise monoethylenisch ungesättigten, Monomers M2, wobei die Angaben in Gew.-% auf die Gesamtmenge der Monomere bezogen sind.

Sofern die Monomere M1 der Formel I mit einem Monomer M2 der Gruppe b9, wie einem vinylaromatischen Kohlenwasserstoff wie beispielsweise Styrol, und einem weiteren Monomer M2 der Gruppe b10, wie einem Ester der Acrylsäure oder Methacrylsäure mit einem C₁-C₂₀-Alkohol wie beispielsweise Methylacrylat, Methylmethacrylat, n-Butylacrylat oder 2-Ethylhexylacrylat, copolymerisiert werden, setzt man die zu polymerisierenden Monomere der Gruppe b9 vorzugsweise in einer Menge von 10 bis 80 Gew.-%, insbesondere 20 bis 60 Gew.-%, und die zu polymerisierenden Monomere der Gruppe b10 in einer Menge von 10 bis 80 Gew.-%, insbesondere 20 bis 60 Gew.-%, ein, wobei die Angaben in Gew.-% auf die Gesamtmenge der Monomere bezogen sind. Die Monomere der Formel I machen dann vorzugsweise 10 bis 80 Gew.-%, insbesondere 20 bis 60 Gew.-%, bezogen auf die Gesamtmenge der Monomere M, aus. Insbesondere setzt man dann die Comonomere M2 der Gruppen b9 und b10 vorzugsweise im Verhältnis von Comonomeren der Gruppe b9 zu Comonomeren der Gruppe b10 von 10 : 1 bis 1 : 10, insbesondere 5:1 bis 1 : 5 ein.

Sofern die Monomere M1 der Formel I mit einem Comonomer M2 der Gruppe b10, wie einem Ester der Acrylsäure oder der Methacrylsäure mit einem C₁-C₂₀-Alkohol wie beispielsweise Methylacrylat, Methylmethacrylat, n-Butylacrylat oder 2-Ethylhexylacrylat, copolymerisiert werden, setzt man die zu polymerisierenden Monomere M2 der Gruppe b10 vorzugsweise in einer Menge von 1 bis 99 Gew.-%, vorzugsweise 50 bis 95 Gew.-% und die Monomere M1 der Formel I in einer Menge von 1 bis 99 Gew.-%, vorzugsweise 5 bis 50 Gew.-%, bezogen auf die Gesamtmenge der Monomere M, ein.

Außerdem kann es zweckmäßig sein, dass die Monomere M1 neben den Monomeren der Formel I und dem bzw. den Comonomer(en) M2 ein oder mehrere mehrfach ethylenisch ungesättigte Monomere mit z.B. 2, 3 oder 4 nicht konjugierten, ethylenisch ungesättigten Doppelbindungen umfassen, die im Folgenden auch als Monomere M3 bezeichnet werden. Beispiele für Monomere M3 sind Diester und Triester ethylenisch ungesättigter Carbonsäuren, insbesondere die Bis- und Trisacrylate von Diolen oder Polyolen mit 3 oder mehr OH-Gruppen, z.B. die Bisacrylate und die Bismethacrylate von Ethylenglykol, Diethylenglykol, Triethylen-glykol, Neopentylglykol oder Polyethylenglykolen. Derartige Monomere M3 werden, sofern erwünscht, z.B. in einer Menge von 0,01 bis 10 Gew.-%, bezogen auf die Gesamtmenge der zu polymerisierenden Monomere, eingesetzt.

Die erfindungsgemäßen Polymere weisen vorzugsweise ein zahlenmittleres Molekulargewicht im Bereich von 1000 bis 10⁶ g/mol, insbesondere im Bereich von 1200 bis 10⁵ g/mol auf. Das gewichtsmittlere Molekulargewicht der erfindungsgemäßen Polymere liegt vorzugsweise im Bereich von 1200 bis 5×10⁶ g/mol, insbesondere im Bereich von 2000 bis 2×10⁶ g/mol. Die Molekulargewichte können gemessen werden durch Gelpermeationschromatographie mit Tetrahydrofuran als Elutionsmittel und Polystyrol (PS) als Standard.

Die erfindungsgemäßen Polymere weisen eine Glasübergangstemperatur von vorzugsweise -50 bis +20 °C, insbesondere von -30 bis +10 °C auf. Die Glasübergangs-temperatur wird durch Differential Scanning Calorimetrie (ASTM D 3418-08, sogenannte "midpoint temperature") bestimmt. Die Glasübergangstemperatur des Polymers ist die bei Auswertung der zweiten Heizkurve (Heizrate 20° C/min) erhaltene Glasübergangstemperatur.

Die Polymerisation der Monomeren kann nach üblichen Verfahren der radikalischen Polymerisation durchgeführt werden. Hierzu zählen Lösungs- und Fällungspolymerisation, Suspensionspolymerisation und Emulsionspolymerisation, einschließlich einer Miniemulsionspolymerisation.

In einer bevorzugten Ausführungsform der Erfindung erfolgt das Polymerisationsverfahren in einem nicht-wässrigen Lösungs- oder Verdünnungsmittel als Polymerisationsmedium. Mit anderen Worten, die Polymerisation wird in einem Lösungs- oder Verdünnungsmittel im Sinne einer Lösungs- oder Fällungspolymerisation durchgeführt, das kein Wasser oder nur geringe Mengen an Wasser enthält. Bezogen auf das Gesamtvolumen der Polymerisationsmischung beträgt die Menge an Wasser vorzugsweise nicht mehr als 2 Gew.-%, insbesondere nicht mehr als 1 Gew.-% und speziell nicht mehr als 0,5 Gew.-%. Vorzugsweise liegt die Menge an Wasser, bezogen auf das Monomer, bei nicht mehr als 10 Gew.-%, häufig nicht mehr als 5 Gew.-%, insbesondere nicht mehr als 2 Gew.-% und speziell nicht mehr als 1 Gew.-%.

Geeignete Lösungs- oder Verdünnungsmittel sind insbesondere solche, in dem die zu polymerisierenden Monomere löslich sind. Man kann auch in organischen Lösungsmitteln polymerisieren, in denen die zu polymerisierenden Monomere nicht löslich sind. Die Poly-merisation erfolgt dann als eine Öl-in-Öl-Emulsions- oder Suspensionspolymerisation, wobei, abhängig von den Mengenverhältnissen von Monomeren und organischem Lösungsmittel, die Monomere die kohärente Phase oder vorzugsweise die disperse Phase bilden.

Geeignete Lösungsmittel umfassen insbesondere aprotische Lösungsmittel. Hierzu zählen aliphatische und cycloaliphatische Kohlenwasserstoffe und Halogenkohlenwasserstoffe wie n-Hexan, n-Heptan, Cyclohexan, Dichlormethan, 1,2-Dichlorethan, aromatische Kohlenwasserstoffe und aromatische Halogenkohlenwasserstoffe wie Benzol, Toluol, Xylole, Chlorbenzol, Dichlorbenzole, Anhydride aliphatischer, nicht-polymerisierbarer Carbonsäuren wie Acetan-hydrid, C₁-C₆-Alkylester und C₅-C₆-Cycloalkylester aliphatischer Monocarbonsäuren mit 1 bis 4 C-Atomen wie Methylacetat, Ethylacetat, Propylacetat, n-Butylacetat, Methylbutyrat, Ethylbutyrat, Propylbutyrat, Methylpropionat, Ethylpropionat, Propylpropionat, Ethylformiat, Butylformiat, Cyclohexylacetat und dergleichen, C₁-C₄-Alkoxy-C₂-C₄-alkylalkanoate wie 1-Methoxy-2-propylacetat oder 2-Methoxyethylacetat, N,N-Di-C₁-C₄-alkylamide von aliphatischen C₁-C₄-Carbonsäuren wie N,N-Dimethylformamid, N,N-Dimethylacetamid, N-C₁-C₄-Alkyllactame wie N-Methylpyrrolidon, N-Ethylpyrrolidon, Di-C₁-C₄-alkylsulfoxide wie Dimethylsulfoxid, alicyclische und cyclische Ketone mit 3 bis 8 C-Atomen wie Methylethylketon, Aceton und Cyclohexanon, Di-C₁-C₄-alkylether und aliphatische, cycloaliphatische und aromatische Ether wie Diethylether, Methyltert.-butylether, Dioxan, Tetrahydrofuran, Monoglyme und Anisol, außerdem cyclische und acyclische, gesättigte Carbonate mit vorzugsweise 3 bis 8 C-Atomen wie Ethylencarbonat (1,3-Dioxolan-2-on) und Propylencarbonat, C₁-C₄-Dialkylcarbonate wie Dimethylcarbonat, Diethylcarbonat, Dipropylcarbonat, Dibutylcarbonat sowie Gemische der vorgenannten aprotischen Lösungsmittel. Geeignete Lösungsmittel für die Polymerisation sind außerdem protische Lösungsmittel und deren Gemische mit einem oder mehreren aprotischen Lösungsmitteln. Hierzu zählen vor allem aliphatische Alkohole wie C₂-C₄-Alkylenglykolmono-C₁-C₄-alkylether wie 1-Methoxy-2-propanol, C₁-C₄-Alkyl- C₂-C₄-alkylenglykolmono-C₁-C₄-alkylether wie 1-Methoxy-2-methyl-2-propanol, C₁-C₁₀-Alkanole wie Methanol, Ethanol, n-Propanol, Isopropanol, n-Butanol, 2-Butanol, Isobutanol, tert.-Butanol, Amylalkohol, Isoamylalkohol sowie Gemische der vorgenannten protischen Lösungsmittel.

Bevorzugte Lösungsmittel sind C₁-C₆-Alkylester von aliphatischen C₁-C₄-Monocarbonsäuren wie n-Butylacetat, C₂-C₄-Alkylenglykolmono-C₁-C₄-alkylether wie 1-Methoxy-2-propanol, C₁-C₄-Alkyl- C₂-C₄-alkylenglykolmono-C₁-C₄-alkylether wie 1-Methoxy-2-methyl-2-propanol, C₁-C₄-Di-alkylcarbonate wie Dimethylcarbonat, Diethylcarbonat, Dipropylcarbonat, Dibutylcarbonat, cyclische Carbonate wie Ethylencarbonat und Propylencarbonat, Ether wie Glyme und Anisol.

Im Falle der Fällungspolymerisation handelt es sich um ein organisches Lösungsmittel oder Verdünnungsmittel, in dem das Copolymer unlöslich ist. Im Falle der Lösungspolymerisation handelt es sich typischerweise um ein organisches Lösungsmittel, in dem das Copolymer löslich ist.

Vorzugsweise wird man das organische Lösungsmittel so bemessen, dass die Menge der zu polymerisierenden Monomere M, bezogen auf die Gesamtmenge an Monomeren M plus Lösungsmittel, im Bereich von 10 bis 65 Gew.-%, insbesondere im Bereich von 20 bis 60 Gew.-% liegt. Bei einer Lösungspolymerisation werden dementsprechend Polymerlösungen mit Feststoffgehalten im Bereich von 10 bis 90 Gew.-% und insbesondere 20 bis 80 Gew.-% erhalten.

Die Polymerisation der Monomere M kann nach üblichen Verfahren der radikalischen Homo- oder Copolymerisation erfolgen. Vorzugsweise wird man hierzu die Monomere M unter Reaktionsbedingungen polymerisieren, bei denen sich Radikale bilden. Die Bildung der Radikale erfolgt vorzugsweise durch Einsatz eines sogenannten Polymerisationsinitiators, d. h. einer Verbindung, die beim Zerfall, der chemisch, thermisch oder photochemisch ausgelöst werden kann, Radikale bildet.

Zu den geeigneten Polymerisationsinitiatoren zählen organische Azoverbindungen, organische Peroxide und Hydroperoxide, anorganische Peroxide und sogenannte Redoxinitiatoren. Zu den organischen Peroxidverbindungen zählen beispielsweise tert.-Butylperoxy-2-ethylhexanoat, tert.-Butylperoxypivalat, Acetylperoxid, Benzoylperoxid, Lauroylperoxid, tert.-Butylperoxyisobutyrat, Caproylperoxid. Zu den Hydroperoxiden zählen neben Wasserstoffperoxid auch organische Hydroperoxide wie Cumolhydroperoxid, tert.-Butylhydroperoxid, tert.-Amylhydroperoxid und dergleichen. Zu den Azoverbindungen zählen beispielsweise 2,2'-Azobis-isobutyronitril, 2,2'-Azobis(2-methylbutyronitril), 2,2'-Azobis[2-methyl-N-(2-hydroxyethyl)propionamid], 1,1'-Azobis(1-cyclohexancarbonitril), 2,2'-Azobis(2,4-dimethylvaleronitril), 2,2'-Azobis(N,N'-dimethylenisobutyroamidin), 2,2'-Azobis(2-methylpropion-amidin), N-(3-Hydroxy-1,1-bis-hydroxymethylpropyl)-2-[1-(3-hydroxy-1,1-bis-hydroxymethyl-propylcarbamoyl)-1-methyl-ethylazo]-2-methylpropionamid sowie N-(1-Ethyl-3-hydroxypropyl)-2-[1-(1-ethyl-3-hydroxypropylcarbamoyl)-1-methyl-ethylazo]-2-methyl-propionamid. Zu den anorganischen Peroxiden zählen Peroxodischwefelsäure und deren Salze wie Ammonium-, Natrium- und Kaliumperoxodisulfat. Unter Redoxinitiatorsystemen versteht man Initiatorsysteme, die ein Oxidationsmittel, beispielsweise ein Salz der Peroxodischwefelsäure, Wasserstoffperoxid oder ein organisches Peroxid wie tert.-Butylhydroperoxid, und ein Reduktionsmittel enthalten. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten, wie beispielsweise das Redoxinitiatorsystem Ascorbinsäure/Eisen(II)sulfat/Natriumperoxodisulfat. Besonders bevorzugte Initiatoren für das erfindungsgemäße Polymerisationsverfahren sind Azoverbindungen, speziell Azobisisobutyronitril (AIBN).

Zur radikalischen Polymerisation der Monomere M werden diese Polymerisationsinitiatoren vorzugsweise in einer Menge von 0,01 bis 5 Gew.-%, insbesondere in einer Menge von 0,1 bis 3 Gew.-%, bezogen auf die zu polymerisierenden Monomere, eingesetzt.

Zur Polymerisation können die üblichen Polymerisationstechniken angewendet werden. Hier sind insbesondere ein (Semi-)Batch-Verfahren, bei dem die Hauptmenge, d.h. wenigstens 60 Gew.-%, insbesondere wenigstens 80 Gew.-% und häufig die Gesamtmenge der zu polymerisierenden Monomere M im Polymerisationsgefäß vorgelegt wird, sowie das Monomerzulaufverfahren, bei dem die Hauptmenge der zu polymerisierenden Monomere M, häufig wenigstens 60 Gew.-%, insbesondere wenigstens 80 Gew.-% und speziell wenigstens 90 Gew.-%, im Verlauf der Polymerisationsreaktion in das Polymerisationsgefäß gegeben wird, zu nennen. Aus Praktikabilitätsgründen wird bei größeren Ansätzen die Polymerisation häufig als Monomerzulaufverfahren durchgeführt.

Der Polymerisationsinitiator kann im Polymerisationsgefäß vorgelegt oder im Verlauf der Polymerisationsreaktion zugegeben werden. Häufig wird man so vorgehen, dass man wenigstens einen Teil des Initiators, vorzugsweise wenigstens 50 Gew.-% und insbesondere wenigstens 80 Gew.-% des Polymerisationsinitiators, im Verlauf der Polymerisationsreaktion zugibt. Insbesondere hat es sich bewährt, einen geringen Teil der Monomere M, z. B. 0,1 bis 20 Gew.-%, bezogen auf die Gesamtmenge der zu polymerisierenden Monomere M, gegebenenfalls zusammen mit einer Teilmenge oder der Gesamtmenge an Polymerisationsinitiator und einem Teil oder der Gesamtmenge des Lösungs- bzw. Verdünnungsmittels, im Polymerisationsgefäß vorzulegen, die Polymerisation zu starten, beispielsweise durch Erwärmen der Polymerisationsmischung, und dann die Restmenge der Monomere M und, sofern erforderlich, die Restmenge an Polymerisationsinitiator und Lösungsmittel im Verlauf der Polymerisation zuzugeben.

Die für die Polymerisation üblicherweise angewendeten Polymerisationstemperaturen liegen, abhängig von dem gewählten Initiatorsystem, vorzugsweise im Bereich von 20 bis 180 °C, insbesondere im Bereich von 40 bis 130 °C und speziell im Bereich von 50 bis 120 °C. Der Polymerisationsdruck ist von untergeordneter Bedeutung und kann im Bereich von Normaldruck oder leichtem Unterdruck, z. B. > 800 mbar, oder bei Überdruck, z. B. bis 10 bar, liegen, wobei höhere oder niedrigere Drücke ebenfalls angewendet werden können. Die Polymerisationsdauer wird vorzugsweise 10 Stunden nicht überschreiten und liegt häufig im Bereich von 1 bis 8 Stunden.

Das erfindungsgemäße Polymerisationsverfahren kann in den für eine radikalische Polymerisation üblichen Reaktoren durchgeführt werden, beispielsweise Rührkesseln, insbesondere solchen mit wandgängigen Rührern, einschließlich Rührkesselkaskaden sowie Rohrreaktoren, die gegebenenfalls dynamische und/oder statische Mischelemente aufweisen können. Die Reaktoren weisen vorzugsweise ein oder mehrere Vorrichtungen zur Zuführung der Edukte und Vorrichtungen zur Entnahme der Produkte sowie gegebenenfalls Mittel zur Zufuhr und zur Abfuhr der Reaktionswärme sowie gegebenenfalls Mittel zur Steuerung und/oder Kontrolle der Reaktionsparameter Druck, Temperatur, Umsatz etc. auf. Die Reaktoren können absatzweise oder kontinuierlich betrieben werden.

Nach Beendigung der Polymerisation kann man das Polymerisationsgemisch in üblicher Weise aufarbeiten. Im Falle einer Fällungspolymerisation kann man das Polymer beispielsweise abfiltrieren. Flüchtige Komponenten, beispielsweise Lösungsmittel, lassen sich auch durch destillative Maßnahmen abtrennen. Im Falle einer Lösungspolymerisation kann man auch eine Fällung des erhaltenen Polymerisats herbeiführen, beispielsweise durch Zugabe eines organischen Lösungsmittels, in welchem das Polymerisat nicht löslich ist. Gegebenenfalls kann man im Anschluss an die Polymerisation auch einen Lösungsmittelaustausch durchführen, z. B. um das Polymer von einer Lösung in eine Dispersion zu überführen. Gegebenenfalls wird man das erhaltene Polymerisat einer Entgasung unterziehen, um weitere flüchtige Bestandteile zu entfernen.

Gegenstand der Erfindung ist auch ein Zweikomponenten-Klebstoff (2K-Klebstoff, insbesondere 2K-Laminierklebstoff, z.B. für die Verbundfolienkaschierung), enthaltend eine erste Komponente enthaltend mindestens ein erfindungsgemäßes Copolymer und eine zweite Komponente enthaltend mindestens einen mehrfunktionellen Härter, welcher mindestens zwei funktionelle Gruppen aufweist ausgewählt aus primären Aminogruppen, sekundären Aminogruppen, Hydroxygruppen, Phosphingruppen, Phosphonatgruppen und Mercaptangruppen. Vorzugsweisesind die funktionellen Gruppen des Härters ausgewählt aus aliphatischen Hydroxylgruppen, aliphatischen primären Aminoguppen, aliphatischen sekundären Aminogruppen, aliphatischen Phosphingruppen, aliphatischen Phosphonatgruppen und aliphatischen Mecaptangruppen.

Unter Zweikomponenten-Klebstoffen (im Folgenden auch 2K-Bindemittelzusammensetzungen genannt) versteht man ein Bindemittel, das wenigstens zwei polyfunktionelle Bindemittelbestandteile enthält, die miteinander unter Bindungsbildung reagieren und dabei ein polymeres Netzwerk ausbilden. Die erfindungsgemäßen Polymere können aufgrund der darin vorhandenen Alkyliden-1,3-dioxolan-2-on-Gruppen mit zahlreichen nucleophilen Gruppen unter Bindungsbildung reagieren. Beispiele für solche nucleophilen Gruppen sind vor allem aliphatische Hydroxylgruppen, aliphatische primäre und sekundäre Aminogruppen, Phosphingruppen, insbesondere aliphatische Phosphingruppen, Phosphonatgruppen, insbesondere aliphatische Phosphonatgruppen, sowie analoge Phosphorverbindungen, außerdem Mercaptangruppen, insbesondere aliphatische Mecaptangruppen.

Dementsprechend enthalten 2K-Bindemittelzusammensetzungen neben wenigstens einem erfindungsgemäßen Polymer vorzugsweise zusätzlich wenigstens eine Verbindung, die wenigstens 2 funktionelle Gruppen F, z.B. 2, 3, 4, 5, 6, 7, 8, 9 oder 10 funktionelle Gruppen F, aufweist, welche unter aliphatischen Hydroxylgruppen, aliphatischen primären oder sekundären Aminogruppen, aliphatischen Phosphingruppen, aliphatischen Phosphonatgruppen u.ä. Gruppen und aliphatischen Mercaptangruppen ausgewählt sind. Diese Verbindungen werden im Folgenden auch als Härter bezeichnet. Bevorzugte funktionelle Gruppen F sind aliphatische Hydroxylgruppen und aliphatische primäre und sekundäre Aminogruppen. Vorzugsweise wird die Menge an Härter so gewählt, dass das Molverhältnis von funktionellen Alkyliden-1,3-dioxo-lan-2-on-Gruppen der Formel I zu den funktionellen Gruppen F im Härter im Bereich von 1 : 10 bis 10 : 1, insbesondere im Bereich von 5 : 1 bis 1 : 5 und speziell im Bereich von 1 : 2 bis 2 : 1 liegt.

Der Härter kann eine niedermolekulare Substanz sein, d. h., sein Molekulargewicht liegt unterhalb 500 g/mol, oder eine oligomere oder polymere Substanz, die ein zahlenmittleres Molekulargewicht oberhalb 500 g/mol aufweist.

Zu den erfindungsgemäß bevorzugten Härtern gehören aminische Härter, d. h. Härter, die wenigstens zwei primäre oder sekundäre Aminogruppen aufweisen, und alkoholische Härter, also Verbindungen, die wenigstens zwei Hydroxylgruppen aufweisen.

Zu den aminischen Härtern, im Folgenden auch Aminhärter, zählen beispielsweise aliphatische und cycloaliphatische Polyamine, aromatische und araliphatische Polyamine sowie polymere Amine, z. B. Aminoplaste und Polyamidoamine. Aminhärter vernetzen Polymere mit 1,3-Dioxolan-2-on-Gruppen, im Folgenden auch Carbonatpolymere genannt, durch Reaktion der primären oder sekundären Aminofunktionen der Polyamine mit den 1,3-Dioxolan-2-on-Gruppen der Carbonatpolymere unter Ausbildung von Urethanfunktionen. Bevorzugte Polyaminhärter weisen im Mittel wenigstens zwei primäre oder sekundäre Aminogruppen pro Molekül, z. B. zwei, drei oder vier primäre oder sekundäre Aminogruppen pro Molekül, auf. Sie können auch zusätzlich ein oder mehrere tertiäre Aminogruppen enthalten. Geeignete Polyamine sind beispielsweise
- aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, 2,2-Dimethylpropylendiamin, Trimethylhexamethylendiamin, 1-(3-Aminopropyl)-3-aminopropan, 1,3-Bis-(3-amino-propyl)propan, 4-Ethyl-4-methylamino-1-octylamin und dergleichen;
- cycloaliphatische Diamine wie 1,2-Diaminocyclohexan, 1,2-, 1,3-, 1,4-Bis(aminomethyl)-cyclohexan, 1-Methyl-2,4-diaminocyclohexan, N-Cyclohexylpropylen-1,3-diamin, 4-(2-Aminopropan-2-yl)-1-methylcyclohexan-1-amin, Isophorondiamin, 4,4'-Diaminodicyclohexylmethan (Dicykan), 3,3'-Dimethyl-4,4'-diaminodicyclohexylmethan, 3,3',5,5'-Tetra-methyl-4,4'-diaminodicyclohexylmethan, 4,8-Diamino-tricyclo[5.2.1.0]decan, Norbornandiamin, Menthandiamin, Menthendiamin und dergleichen;
- aromatische Diamine wie Toluylendiamin, Xylylendiamin, insbesondere meta-Xylylendiamin (MXDA), Bis(4-aminophenyl)methan (MDA oder Methylendianilin), Bis(4-aminophenyl)sulfon (auch als DADS, DDS oder Dapson bekannt) und dergleichen;
- cyclische Polyamine wie Piperazin, N-Aminoethylpiperazin und dergleichen;
- Polyetheramine, insbesondere difunktionelle und trifunktionelle primäre Polyetheramine auf der Basis von Polypropylenglykol, Polyethylenglykol, Polybutylenoxid, Poly-(1,4-butandiol), Poly-Tetrahydrofuran (Poly-THF) oder Polypentylenoxid, z. B. 4,7,10-Trioxatridecan-1,3-diamin, 4,7,10-Trioxatridecan-1,13-diamin, 1,8-Diamino-3,6-dioxaoctan (XTJ-504, Fa. Huntsman), 1,10-Diamino-4,7-dioxadecan (XTJ-590, Fa. Huntsman), 1,12-Diamino-4,9-dioxadodecan (Fa. BASF SE), 1,3-Diamino-4,7,10-trioxatridecan (Fa. BASF SE), primäre Polyetheramine auf der Basis von Polypropylenglykol mit einer mittleren Molmasse von 230 wie z. B. Polyetheramine D 230 (Fa. BASF SE) oder Jeffamine^{®} D 230 (Fa. Huntsman), difunktionelle, primäre Polyetheramine auf der Basis von Polypropylenglykol mit einer mittleren Molmasse von 400, z. B. Polyetheramine D 400 (Fa. BASF SE) oder Jeffamine^{®} XTJ 582 (Fa. Huntsman), difunktionelle, primäre Polyetheramine auf Basis von Polypropylenglykol mit einer mittleren Molmasse von 2000 wie z. B. Polyetheramine D 2000 (Fa. BASF SE), Jeffamine^{®} D2000 oder Jeffamine^{®} XTJ 578 (jeweils Fa. Huntsman), difunktionelle, primäre Polyetheramine auf der Basis von Propylenoxid mit einer mittleren Molmasse von 4000 wie z. B. Polyetheramin D 4000 (Fa. BASF SE), trifunktionelle, primäre Polyetheramine hergestellt durch Reaktion von Propylenoxid mit Trimethylolpropan, gefolgt durch eine Aminierung der endständigen OH-Gruppen mit einer mittleren Molmasse von 403 wie z. B. Polyetheramine T 403 (Fa. BASF SE) oder Jeffamine^{®} T 403 (Fa. Huntsman), trifunktionelle, primären Polyetheramin, hergestellt durch Reaktion von Propylenoxid mit Glycerin, gefolgt durch eine Aminierung der endständigen OH-Gruppen mit einer mittleren Molmasse von 5000 wie z. B. Polyetheramine T 5000 (Fa. BASF SE) oder Jeffamine^{®} T 5000 (Fa. Huntsman), aliphatische Polyetheramine, die aus einem mit Propylenoxid gepfropften Polyethylenglykol aufgebaut sind und eine mittlere Molmasse von 600 aufweisen, wie z. B. Jeffamine^{®} ED-600 bzw. Jeffamine^{®} XTJ-501 (jeweils Fa. Huntsman), aliphatische Polyetheramine, die aus einem mit Propylenoxid gepfropften Polyethylenglykol aufgebaut sind und eine mittlere Molmasse von 900 aufweisen, wie z. B. Jeffamine^{®} ED-900 (Fa. Huntsman), aliphatische Poly-etheramine, die aus einem mit Propylenoxid gepfropften Polyethylenglykol aufgebaut sind und eine mittlere Molmasse von 2000 aufweisen, wie z. B. Jeffamine^{®} ED-2003 (Fa. Huntsman), difunktionelle, primäre Polyetheramin, hergestellt durch Aminierung eines mit Propylenoxid gepfropften Diethylenglykols mit einer mittleren Molmasse von 220 wie z. B. Jeffamine^{®} HK-511 (Fa. Huntsman), aliphatische Polyetheramine auf der Basis eines Copolymers aus Poly(tetramethylenetherglykol) und Polypropylenglykol mit einer mittleren Molmasse von 1000 wie z. B. Jeffamine^{®} XTJ-542 (Fa. Huntsman), aliphatische Polyetheramine auf der Basis eines Copolymers aus Poly(tetramethylenetherglykol) und Polypropylenglykol mit einer mittleren Molmasse von 1900 wie z. B. Jeffamine^{®} XTJ-548 (Fa. Huntsman), aliphatische Polyetheramine auf der Basis eines Copolymers aus Poly(tetra-methylenetherglykol) und Polypropylenglykol mit einer mittleren Molmasse von 1400 wie z. B. Jeffamine^{®} XTJ-559 (Fa. Huntsman), Polyethertriamine auf der Basis eines mit Butylenoxid gepfropften mindestens dreiwertigen Alkohols mit einer mittleren Molmasse von 400 wie z. B. Jeffamine^{®} XTJ-566 (Fa. Huntsman), aliphatische Polyetheramine, hergestellt durch Aminierung von mit Butylenoxid aufgepfropften Alkoholen mit einer mittleren Molmasse von 219 wie z. B. Jeffamine^{®} XTJ-568 (Fa. Huntsman), Polyetheramine auf der Basis von Pentaerythrit und Propylenoxid mit einer mittleren Molmasse von 600 wie z. B. Jeffamine^{®} XTJ-616 (Fa. Huntsman), Polyetheramine auf der Basis von Triethylenglykol mit einer mittleren Molmasse von 148, z. B. Jeffamine^{®} EDR-148 (Fa. Huntsman), difunktionelle, primäre Polyetheramine, hergestellt durch Aminierung eines mit Propylenoxid gepfropften Ethylenglykols mit einer mittleren Molmasse von 176 wie z. B. Jeffamine^{®} EDR-176 (Fa. Huntsman) sowie Polyetheramine, hergestellt durch Aminierung von Poly-Tetra-hydrofuran (Poly-THF) mit einer mittleren Molmasse von 250, z. B. PolyTHF-Amin 350 (Fa. BASF SE) und Mischungen dieser Amine;
- Polyamidoamine (Amidopolyamine), die durch die Reaktion von dimeren Fettsäuren (z. B. dimere Linolsäure) mit niedermolekularen Polyaminen wie Diethylentriamin, 1-(3-Aminopropyl)-3-aminopropan oder Triethylentetramin oder anderen Diaminen wie den zuvor genannten aliphatischen oder cycloaliphatischen Diaminen erhältlich sind;
- Addukte, die durch Umsetzung von Aminen, insbesondere Diaminen, mit einem Unterschuss an Epoxidharz bzw. Reaktivverdünner erhältlich sind, wobei man vorzugsweise solche Addukte einsetzt, worin etwa 5 bis 20 % der Epoxidgruppen mit Aminen, insbesondere Diaminen, umgesetzt worden sind;
- Phenalkamine, wie aus der Epoxidchemie bekannt;
- Mannichbasen, welche z. B. durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis(aminomethyl)cyclohexan mit Aldehyden, vorzugsweise Formaldehyd und ein- oder mehrwertigen Phenolen mit mindestens einer aldehydreaktiven Kernstelle, z. B. die verschiedenen Kresole und Xylenole, p-tert.-Butyl-phenol, Resorcin, 4,4'-Dihydroxydiphenylmethan, 4,4'-Dihydroxydiphenyl-2,2-propan, vorzugsweise aber Phenol, hergestellt werden;
sowie Mischungen der vorgenannten Aminhärter, insbesondere Mischungen von difunktionellen Aminen aus der Gruppe der aliphatischen, cycloaliphatischen und aromatischen Amine mit den vorgenannten Polyetheraminen.

Bevorzugte aminische Härter sind aliphatische Polyamine, insbesondere 2,2-Dimethylpropylendiamin, aromatische Diamine, insbesondere m-Xylylendiamin (MXDA) und cycloaliphatische Diamine, insbesondere Isophorondiamin, N-Cyclohexylpropylen-1,3-diamin und 4,4'-Diaminodicyclohexylmethan (Dicykan). Bevorzugt sind auch difunktionelle oder trifunktionelle primäre Polyetheramine auf der Basis von Polypropylenglykol, wie z. B. Jeffamine^{®} D 230 oder Jeffamine^{®} T 403. Besonders bevorzugt sind Polyamine, bei denen eine hohe Beweglichkeit und eine geringe sterische Hinderung rund um die Aminogruppe vorherrschen, z.B. 4,9-Dioxado-decan-1,12-diamin, 4,7,10-Trioxatridecan-1,13-diamin, PolyTHF Amin 350 (BASF SE).

Bevorzugt sind auch Mischungen der als bevorzugt genannten Amine, beispielsweise Mischungen, die 2,2-Dimethylpropylenamin und Isophoronamin enthalten.

Zu den alkoholischen Härtern zählen vor allem niedermolekulare und höhermolekulare aliphatische und cycloaliphatische Alkohole. Alkoholische Härter vernetzen Carbonatpolymere durch Reaktion der primären oder sekundären Alkoholfunktionen mit den 1,3-Dioxolan-2-on-Gruppen der Carbonatpolymere unter Ausbildung von Diestern der Kohlensäure. Bevorzugte alkoholische Härter weisen im Mittel wenigstens zwei primäre oder sekundäre Hydroxygruppen pro Molekül, z. B. zwei, drei oder vier primäre oder sekundäre Hydroxygruppen pro Molekül, auf. Geeignete niedermolekulare alkoholische Härter sind z. B. 1,4-Butandiol, Ethylenglykol, Diethylenglykol, Triethylenglykol, Neopentylglykol, 1,3-Propandiol, 1,5-Pentandiol, 1,6-Hexandiol, Glycerin, Diglycerin, Pentaerythrit, Dipentaerythrit, Zuckeralkohole wie Sorbit und Mannit.

Geeignete alkoholische Härter sind auch höhermolekulare, polymere Polyole, beispielsweise Polyesterpolyole, Polycarbonatpolyole, Polyetherpolyole, Polyacrylatpolyole und Polyvinylalkohole. Geeignete polymere Polyolhärter weisen vorzugsweise eine mittlere OH-Funktionalität von wenigstens 1,5 mol und speziell wenigstens 1,8, z. B. im Bereich von 1,5 bis 10 und insbesondere im Bereich von 1,8 bis 4, auf. Unter der mittleren OH-Funktionalität versteht man die mittlere Anzahl OH-Gruppen je Polymerkette. Typische polymere Polyolkomponenten weisen vorzugsweise ein zahlenmittleres Molekulargewicht von etwa 250 bis 50000 g/mol, vorzugsweise von etwa 500 bis 10000 g/mol auf. Vorzugsweise sind wenigstens 50 mol-% der in der polymeren Polyolkomponente enthaltenen Hydroxylgruppen primäre Hydroxylgruppen.

Vorzugsweise handelt es sich bei Polyesterpolyolen um lineare oder verzweigte polymere Verbindungen mit Estergruppen im Polymerrückgrat, die an den Enden der Polymerkette freie Hydroxylgruppen aufweisen. Vorzugsweise handelt es sich hierbei um Polyester, die durch Polykondensation von zweiwertigen Alkoholen mit zweiwertigen Carbonsäuren, gegebenenfalls in Gegenwart höherwertiger Alkohole (z. B. 3, 4, 5 oder 6-wertiger Alkohole) und/oder höherwertiger Polycarbonsäuren, erhalten werden. Anstelle der freien Di- bzw. Polycarbonsäuren können auch die entsprechenden Di- bzw. Polycarbonsäureanhydride oder entsprechende Di- bzw. Polycarbonsäureester von niederen Alkoholen oder deren Gemische zur Herstellung der Polyesterpolyole verwendet werden. Die Di- bzw. Polycarbonsäuren können aliphatisch, cyclo-aliphatisch, araliphatisch, aromatisch oder heterocyclisch sein, weisen vorzugsweise 2 bis 50 und insbesondere 4 bis 20 C-Atome auf und können gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure und dimere Fettsäuren. Für die Herstellung der Polyesterpolyole kommen als Diole insbesondere aliphatische und cycloaliphatische Diole mit vorzugsweise 2 bis 40 und insbesondere 2 bis 20 C-Atomen in Betracht, z. B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole. Bevorzugt sind Alkohole der allgemeinen Formel HO-(CH₂)ₓ-OH, wobei x eine Zahl von 2 bis 20, bevorzugt eine gerade Zahl von 2 bis 12 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentan-1,5-diol.

Geeignet als alkoholische Härter sind auch Polyesterpolyole auf Lacton-Basis, wobei es sich um Homo- oder Mischpolymerisate von Lactonen, bevorzugt um endständige Hydroxylgruppenaufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Startermoleküle sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Beispiele für geeignete Polyesterpolyole sind z. B. die aus Ullmanns Enzyklopädie der Technischen Chemie, 4. Auflage, Band 19, Seiten 62 bis 65 bekannten Polyesterpolyole.

Ferner kommen auch Polycarbonatpolyole, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Polyetherpolyolen handelt es sich insbesondere um Polyetherpolyole, die durch Polymerisation von Ethylenoxid, Propylenoxid, Butylenoxid, Tetrahydrofuran, Styroloxid oder Epichlorhydrin mit sich selbst, z. B. in Gegenwart von BF₃ oder durch Anlagerung dieser Verbindungen gegebenenfalls im Gemisch oder nacheinander, an bi- oder polyfunktionelle Startkomponenten mit reaktionsfähigen Wasserstoffatomen, wie Polyole oder polyfunktionelle Amine, z. B. Wasser, Ethylenglykol, Propan-1,2-diol, Propan-1,3-diol, 1,1-Bis-(4-hydroxyphenyl)propan, Trimethylolpropan, Glycerin, Sorbit, Ethanolamin oder Ethylendiamin, hergestellt werden können. Auch Succrosepolyether (siehe DE 1176358 und DE 1064938) sowie auf Formit oder Formose gestartete Polyether (siehe DE 2639083 und DE 2737951) kommen in Frage.

Geeignet sind ebenfalls Polyhydroxyolefine, bevorzugt solche mit 2 endständigen Hydroxylgruppen, z. B. α-ω-Dihydroxypolybutadien.

Geeignet sind ebenfalls Polyhydroxypolyacrylate, wobei die Hydroxylgruppen seitenständig oder endständig angeordnet sein können. Beispiel hierfür sind α,ω-Dihydroxypoly(meth)acryl-ester, die durch Homo- oder Copolymerisation von Alkylestern der Acrylsäure und/oder der Methacrylsäure in Gegenwart von OH-Gruppen-enthaltenden Reglern wie Mercaptoethanol oder Mercaptopropanol und anschließende Umesterung mit einem niedermolekularen Polyol, beispielsweise einem Alkylenglykol wie Butandiol, erhältlich sind. Solche Polymere sind beispielsweise aus der EP-A 622 378 bekannt. Beispiel hierfür sind weiterhin Polymere, die durch Copolymerisation von Alkylestern der Acrylsäure und/oder der Methacrylsäure mit Hydroxyalkylestern ethylenisch ungesättigter Carbonsäure wie Hydroxyethylacrylat, Hydroxypropylacrylat, Hydroxybutylacrylat, Hydroxyethylmethacrylat, Hydroxypropylmethacrylat oder Hydroxybutylmethacrylat erhältlich sind.

Geeignet sind auch Polyvinylalkohole, die vorzugsweise durch vollständige oder teilweise Verseifung von Polyvinylestern, insbesondere Polyvinylacetat, erhalten werden können. Sofern die Polyvinylester, bevorzugt Polyvinylacetat, teilverseift vorliegen, liegen bevorzugt höchstens 50 bis 95 % der Estergruppen verseift als Hydroxylgruppen vor. Sofern die Polyvinylester, bevorzugt Polyvinylacetat, vollständig verseift vorliegen, liegen im Allgemeinen mehr als 95 % bis zu 100 % der Estergruppen verseift als Hydroxylgruppen vor.

Unter den höhermolekularen, polymeren Polyolen bevorzugte alkoholische Härter sind insbesondere Polyacrylatpolyole, diese sind beispielsweise unter dem Markennamen Joncryl^{®} der Fa. BASF SE erhältlich, z. B. Joncryl^{®} 945.

Geeignete Härter sind auch Aminosäuren, z. B. Lysin, Arginin, Glutamin und Asparagin und deren Stereoisomere und deren Mischungen.

Selbstredend können auch Mischungen unterschiedlicher Härter eingesetzt werden, z. B. Mischungen eines oder mehrerer aminischer Härter mit einem oder mehreren alkoholischen Härtern, Mischungen eines oder mehrerer aminischer Härter mit einer oder mehreren Aminosäuren oder Mischungen eines oder mehrerer alkoholischer Härter mit einer oder mehreren Aminosäuren.

In den erfindungsgemäßen Bindemittelzusammensetzungen beträgt die Gesamtmenge an Härtern vorzugsweise 0,1 Gew.-% bis 50 Gew.-%, häufig 0,5 bis 40 Gew.-% und insbesondere 1 bis 30 Gew.-%, bezogen auf die Gesamtmenge an Carbonatpolymeren plus eingesetzten Härtern.

Die Härtung der Bindemittelzusammensetzung kann thermisch durch Erwärmen des Gemischs aus erfindungsgemäßem Polymer und Härter auf eine Temperatur oberhalb der Mischtemperatur erfolgen. Die Härtung kann auch bei niedrigeren Temperaturen erfolgen. Typischerweise erfolgt die Härtung der erfindungsgemäßen Bindemittelzusammensetzungen bei Temperaturen im Bereich von 0 bis 200 °C, vorzugsweise im Bereich von 5 bis 180 °C und insbesondere im Bereich von 10 bis 150 °C. Welche Temperatur geeignet ist, hängt von den jeweiligen Härtern und der gewünschten Härtungsgeschwindigkeit ab und kann im Einzelfall vom Fachmann beispielsweise anhand einfacher Vorversuche ermittelt werden. Im unteren Temperaturbereich (5 bis ca. 35 °C), der ja der meist vorherrschenden Umgebungstemperatur entspricht, reicht es selbstverständlich aus, erfindungsgemäßes Polymer und Härter zu mischen. Alternativ erfolgt die Härtung vorzugsweise mikrowelleninduziert.

Die 2K-Bindemittelzusammensetzungen können auch einen oder mehrere geeignete Katalysatoren für die Aushärtung enthalten, die sich in bekannter Weise nach der Art der reaktiven funktionellen Gruppen F richten. Die Katalysatoren werden, sofern erwünscht, in Anteilen von 0,01 Gew.-% bis etwa 10 Gew.-%, bezogen auf das Gesamtgewicht der erfindungsgemäßen Polymere mit funktionellen Alkyliden-1,3-dioxolan-2-on-Gruppen der Formel I und des Härters, eingesetzt. In einer Ausgestaltung werden keine Katalysatoren benötigt, insbesondere bei Härtern, die als funktionelle Gruppen Aminogruppen aufweisen, d.h., der Gehalt an Katalysatoren in der Zusammensetzung beträgt dann weniger als 0,01 Gew.-%. Katalysatoren werden bevorzugt dann eingesetzt, wenn der Härter reaktive Gruppen F aufweist, die von Aminogruppen verschieden sind, insbesondere wenn der Härter Hydroxylgruppen aufweist.

Bevorzugt eingesetzte Katalysatoren sind basische Katalysatoren, besonders bevorzugt organische Amine und organische Phosphine. Unter den organischen Aminen sind Amidinbasen, wie beispielsweise 1,8-Diazabicyclo[5.4.0]undec-7-en (DBU) und 1,5-Diazabicyclo[4.3.0]non-5-en (DBN), Mono-C₁-C₆-alkyl-, Di-C₁-C₆-alkyl- und Tri-C₁-C₆-alkylamine, insbesondere Triethylamin und tert.-Butylamin, bevorzugt. Unter den organischen Phosphinen sind Trialkylphosphine und Triarylphosphine bevorzugt, beispielsweise Tri-n-butylphosphin und Triphenylphosphin. Die Katalysatoren können selbstverständlich auch als Mischungen eingesetzt werden, gegebenenfalls in Kombination mit Tri-C₁-C₆-alkylammoniumhalogeniden und Kupfersalzen, zum Beispiel Triphenylphosphin in Kombination mit einem Tri-C₁-C₆-alkylammoniumhalogenid und einem Kupfersalz, z. B. Kupfer(I)-chlorid, Kupfer(I)-bromid, Kupfer(II)-chlorid oder Kupfer(II)-sulfat.

Neben den vorgenannten Bestandteilen kann die 2K-Bindemittelzusammensetzung die hierfür üblichen Additive enthalten. Die Wahl geeigneter herkömmlicher Additive für die erfindungsgemäße Zusammensetzung hängt vom jeweiligen Verwendungszweck der 2K-Bindemittelzu-sammensetzung ab und kann im Einzelfall vom Fachmann bestimmt werden.

Geeignete Additive umfassen beispielsweise Antioxidantien, UV-Absorber/Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, Adhäsionsregulatoren, optische Aufheller, Flammschutzmittel, Antitropfmittel, Nukleierungsmittel, Netzmittel, Verdicker, Schutzkolloide, Entschäumer, Tackifier, Lösungsmittel und Reaktivverdünner sowie Gemische davon.

Füllstoffe können organischer und anorganischer Natur sein; bevorzugte anorganische Füllstoffe liegen in Form von Plättchen vor, die sich zu Schichten mit verstärkter Barrierewirkung gegenüber Flüssigkeiten und Gasen ausrichten lassen. Beispiel sind Schichtsilikate wie Montmorillonit und Hectorit, wie sie z.B. in der WO 2011/089089, WO 2012/175427 oder in der WO 2012/175431 beschrieben sind. Bevorzugt sind Schichtsilikate, die ein Aspektverhältnis von mindestens 50, mindestens 400, oder mindestens 1000 und insbesondere größer oder gleich 10000 aufweisen. Die Schichtdicke ist z.B. ungefähr 1 nm. Die Schichtsilikate können natürlichen oder synthetischen Ursprungs sein. Geeignete Schichtsilikate sind z.B. Montmorillonit, Bentonit, Kaolinit, Mica, Hectorit, Fluorohectorit, Saponit, Beidellit, Nontronit, Stevensite, Vermiculit, Fluorovermiculit, Halloysit, Volkonskoit, Suconit, Magadit, Sauconit, Stibensit, Stipulgit, Attapulgit, Illit, Kenyait, Smectit, Allevardit, Muscovit, Palygorskit, Sepiolit, Silinait, Grumantit, Revdit, Zeolit, Fuller's earth, natürlicher oder synthetischer Talk oder Mica, oder Permutit. Besonders bevorzugt sind Montmorillonit (Aluminiummagnesiumsilikat), Hectorit (Magnesiumlithiumsilikat), synthetisches Fluorohectorit und exfolierte, organisch modifizierte Smectite. Die Schichtsilikate können modifiziert oder unmodifiziert sein. Bevorzugt sind kationisch modifizierte Schichtsilikate. Kationisch modifiziert bedeutet, dass anorganische Kationen des Schichtsilikats zumindest zum Teil gegen organische Kationen ausgetauscht sind, z.B. durch ein Ionenaustauschverfahren. Organische Kationen sind organische Verbindungen, welche mindestens eine kationische Gruppe aufweisen, z.B. quaternäre Ammoniumgruppe, Phosphoniumgruppe, Pyridiniumgruppe oder ähnliche oder ein kationisches Aminsalz.

Die gegebenenfalls verwendeten Lichtstabilisatoren/UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren und
t) basische Costabilisatoren.

Der Zweikomponenten-Klebstoff ist vorzugsweise frei von Isocyanaten, d.h. er enthält vorzugsweise keine Isocyanatverbindungen als Härter. Der Zweikomponenten-Klebstoff liegt vorzugsweise entweder in Form einer Lösung in einem organischen Lösungsmittel oder er ist lösemittelfrei. Lösemittelfrei bedeutet, dass weniger als 5 Gew.%, besonders bevorzugt weniger als 2 Gew.% oder kein organisches Lösungsmittel oder Wasser enthalten ist.

Gegenstand der Erfindung ist auch ein Verfahren zur Herstellung von Laminaten, wobei eine Folie unter Verwendung mindestens eines erfindungsgemäßen Copolymeren oder unter Verwendung eines erfindungsgemäßen Zweikomponenten-Klebstoffs auf ein Substrat kaschiert wird. Bei Kaschierungen handelt es sich um ein Verfahren zum Verkleben von großflächigen Substraten, z.B. für die Herstellung von Verbundfolien und für die Herstellung von kaschierten Formkörpern. Geeignete Substrate sind z.B. Polymerfolien, Metallfolien, Papier und Formkörpern aus Metall, Kunststoff oder Holz.

Die vorliegende Erfindung betrifft somit auch ein Verfahren zur Herstellung von Verbundfolien, bei dem man einen erfindungsgemäßen Zweikomponenten-Klebstoff einsetzt. Hierbei können die Zweikomponenten-Klebstoffe als solche oder nach Konfektionierung mit üblichen Additiven eingesetzt werden. Bei dem Verfahren zur Herstellung von Verbundfolien werden mindestens zwei Folien unter Verwendung des Zweikomponenten-Klebstoffs miteinander verklebt.

Bei dem erfindungsgemäßen Verfahren zur Herstellung von Verbundfolien wird der erfindungsgemäße Zweikomponenten-Klebstoff auf die zu verklebenden, großflächigen Substrate vorzugsweise mit einer Schichtdicke von 0,1 bis 20 g/m², besonders bevorzugt 1 bis 7 g/m² z.B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung von flüchtigen Bestandteilen kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 kN/m², vorzugsweise 300 bis 2000 kN/m² betragen kann.

Wenigstens eine der Folien kann auf der mit dem Klebstoff beschichteten Seite bedruckt oder metallisiert sein. Als Substrate eignen sich z.B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz : metallisierte Folien) oder Metallfolien, z. B. aus Aluminium. Die genannten Folien können miteinander oder mit Papier oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie, hergestellt unter Verwendung eines der oben beschriebenen erfindungsgemäßen Zwei-Komponentenklebstoffe, wobei das Material einer ersten Folie ausgewählt ist aus OPP, CPP, PE, PET und PA und wobei das Material einer zweiten Folie ausgewählt ist aus OPP, CPP, PE, PET, PA und Metallfolie. In einer Ausführungsform der Erfindung ist die erste Folie und/oder die zweite Folie auf der jeweiligen Seite, welche mit dem Klebstoff beschichtet wird, bedruckt oder metallisiert. Die Dicke der Substratfilme kann beispielsweise von 5 bis 100 µm, vorzugsweise von 5 bis 40 µm betragen.

Eine Oberflächenbehandlung der Foliensubstrate ist vor der Beschichtung mit einem erfindungsgemäßen Klebstoffs nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Der erfindungsgemäße Klebstoff ist in der Lage, in kurzer Zeit hinreichend hohe Verbundfestigkeiten aufzubauen. Vorzugsweise weist ein erfindungsgemäß hergestelltes Laminat nach 1 Minute eine Scherfestigkeit von größer 0,2 N und eine Scherfestigkeit von größer 1 N nach 24 Stunden auf, gemessen bei 20 °C auf (siehe Beispiele).

Gegenstand der Erfindung ist auch ein Laminat, hergestellt nach dem erfindungsgemäßen Verfahren.

Gegenstand der Erfindung ist auch die Verwendung von erfindungsgemäßen Copolymeren als Komponenten von Klebstoffen, insbesondere von Kaschierklebstoffen, insbesondere von Zweikomponenten-Klebstoffen bzw. von Zweikomponenten-Kaschierklebstoffen sowie die Verwendung als Komponenten von Lacken, Beschichtungen, Dichtungsmitteln, Farben und Tinten und zur Bindung von Fasern und Partikeln. Gegenstand der Erfindung ist auch die Verwendung von erfindungsgemäßen Copolymeren zur Herstellung von flexiblen Verpackungen, insbesondere von flexiblen Lebensmittelverpackungen.

Besondere Vorteile des erfindungsgemäßen Herstellverfahrens und der erfindungsgemäßen Produkte sind insbesondere:
- isocyanatfreier Kaschierklebstoff, insbesondere gut geeignet für flexible Verpackungen, insbesondere für Lebensmittelverpackungen
- Aufbau von hinreichend hohen Verbundfestigkeiten im Verpackungslaminat in einer kurzen Zeit

### Beispiele

### 1. Materialien

### ExoVC-acrylat 1:

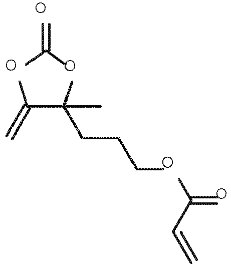

### ExoVC-acrylat 2:

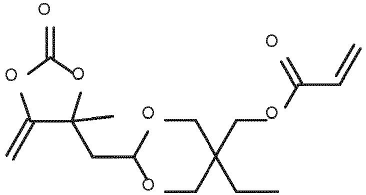

### 2. Herstellungsbeispiele Monomere

### 2.1. Herstellung des ExoVC-acrylat 1

Die Herstellung erfolgt in vier Stufen.

Das nachstehende Reaktionsschema umfasst die Stufen 1 bis 3

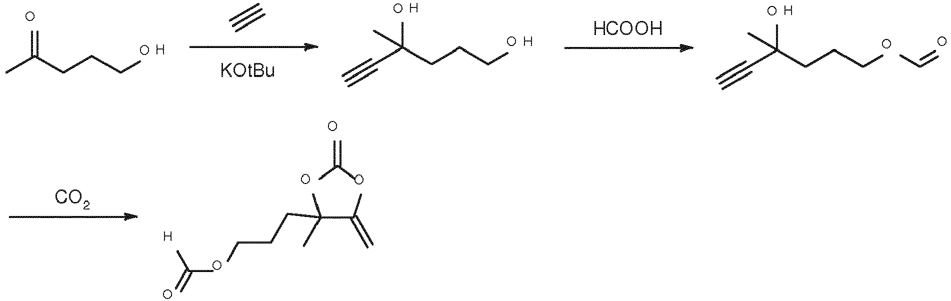

### 1. Stufe: Umsetzung von Hydroxypentanon mit Acetylen zum Acetylen-Addukt:

KOtBu (800 g, 7,1 mol) wird in wasserfreiem THF (4,5 L) vorgelegt und auf 0-3°C gekühlt. Acetylen (280 g, 10,8 mol) wird innerhalb von 3 h bei dieser Temperatur eingeleitet. Unter weiterem Einleiten von Acetylen (130 g, 5 mol) wird dann Hydroxypentanon (550 g, 5.39 mol) innerhalb von 1 h bei 0-6°C zugetropft. Hierbei entsteht nach Durchlaufen eines Viskositätsmaximums eine orangebraune Lösung. Nach 1 h Nachrühren bei 0-3 °C wird auf RT erwärmt und bei 20-25°C Ammoniumchlorid (1068 g in 5 L Wasser) innerhalb von 45 min zugegeben. Dabei bilden sich zwei Phasen. Die organische Phase wird abgetrennt, über Natriumsulfat getrocknet und das Lösemittel wird bei 40 °C und 5 mbar am Rotationsverdampfer entfernt. Es werden 649 g eines braunen Öls erhalten. Dieses wird im Ölpumpen-Vakuum destilliert, wobei auf eine Sumpftemperatur von max. 130°C geachtet wurde. Die Hauptfraktion wurde bei 110-111°C in Form eines gelben Öls (440 g, 3,4 mol, 64%) erhalten.

Reinheit (GC-Flächen-%): 93%

### 2. Stufe: Umsetzung des Diols mit Ameisensäure zum Formiat:

Das in der ersten Stufe erhaltene Diol (1.305 kg, 10.2 mol) wird vorgelegt und innerhalb von 1 h bei 7-8 °C mit Ameisensäure (1.512 L, 40 mol) versetzt. Dann wird auf Raumtemperatur erwärmt und man beobachtet das Fortschreiten der Reaktion mittels GC/FID. Man lässt die Reaktion so lange laufen, bis der Hauptpeak praktisch nicht mehr zunimmt, was nach ca. 4 h bei RT der Fall ist. Führt man die Reaktion über diesen Punkt hinaus fort, bildet sich vermehrt zweifach formyliertes Produkt. Zur Aufarbeitung wird zunächst im Vakuum, ohne zu erwärmen, eingeengt und das erhaltene Rohprodukt dann bei 12 mbar destilliert. Die Hauptfraktion geht bei 112-115 °C als klare, gelbe Flüssigkeit (1.453 kg, 9.3 mol, 91%) über.

Reinheit (GC-Flächen-%): 93%

### 3. Stufe: Ringschluss mit CO₂ zum ExoVC-formiat

Das in der zweiten Stufe erhaltene Formiat (1.623 kg, 10.4 mol) wird mit Silberacetat (1.38 g) und TMTACN (N,N',N"-trimethyl-1,4,7-triazacyclononan, 13.8 mL) versetzt und in einem Rührautoklaven mit Druckhalteventil mit 10 bar CO₂ beaufschlagt. Innerhalb von 5 h steigen die Temperatur auf 56°C und der Druck auf 18 bar an. Wenn die Temperatur wieder auf RT abgefallen ist, wird auf 70 °C erwärmt. Der Druck steigt dabei auf ca. 28 bar an. Nach ca. 4 h zeigt die Reaktionskontrolle praktisch kein Edukt mehr (GC/FID). Es wird abgekühlt und entspannt. Der Autoklaveninhalt wird nach Zusatz von Dichlormethan (1.5 L) zweimal mit HCl (10%ige Lösung, je 480 mL) gewaschen, über Natriumsulfat getrocknet und das Lösemittel am Rotationsverdampfer entfernt (40°C, 60 mbar). Danach werden unter Rühren bei RT alle im Ölpumpenvakuum flüchtigen Bestandteile entfernt, was bis zu 48 h dauern kann. Es werden ca. 1,9 kg Rohprodukt erhalten. Zur weiteren Aufreinigung werden in einem Dünnschichtverdampfer mit Wischersystem zunächst flüchtige Komponenten abgetrennt (0,05-0,02 mbar, Manteltemperatur 109-114°C). Hierfür sind in der Regel mindestens zwei Läufe erforderlich. In einem weiteren Lauf wird dann die Zielverbindung von schwerflüchtigen Bestandteilen abgetrennt (0,012 mbar, Manteltemperatur 170°C).

Ausbeute an ExoVC-formiat: 1,419 kg (7,1 mol, 68%).

Reinheit (GC-Flächen-%): 97%

### 4. Stufe: Acrylierung zum ExoVC-acrylat 1

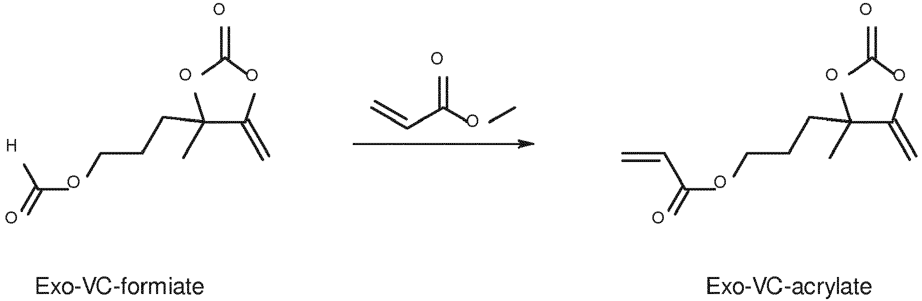

In einem zwei Liter Flachkolben mit Teflonrührer, Thermometer und Kühler wurden 300g Exo-VC-formiat (1.5 mol) und 1200 g Methylacrylat (14 mol) gegeben. Das Methylacrylat enthielt 0,3g MeHQ (Monomethylether des Hydrochinons) als Inhibitor. Die Mischung wurde gerührt und auf 40°C erwärmt. 30 g des Enzyms Candida Antartica Lipase B (immobilisierte Form) wurden zugesetzt. Nach 24 Stunden wurde die erhaltene Mischung in einen zwei Liter Rundkolben dekantiert, wobei das Enzym in dem Flachkolben zurückblieb. Das entstandene Methanol und gleichzeitig Methylacrylat wurden unter Vakuum entfernt. Der Rückstand wurde zusammen mit 1000g frischem Methylacrylat zurück in den Flachkolben gegeben, der das Enzym enthält. Die erhaltene Mischung wurde erneut 24 Stunden bei 40°C gerührt. Die Reaktionsmischung wurde auf Raumtemperatur abgekühlt und filtriert. Methanol und nicht umgesetztes Methylacrylat wurden unter Vakuum abdestilliert.

Die Ausbeute betrug 339 g Exo-VC-acrylat 1

Reinheit: 96.7% (gaschromatographisch bestimmt)

### 2.2 Herstellung von ExoVC-acrylat 2

Die Herstellung erfolgt in vier Stufen.

Das nachstehende Reaktionsschema umfasst die Stufen 1 bis 3

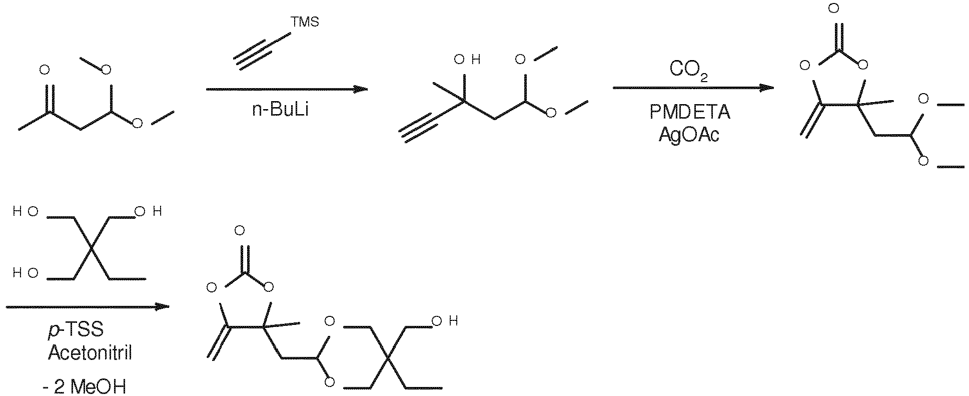

### 1.) Ethinylierung von 4,4-Dimethoxybutan-2-on:

TMS-Acetylen (982 g, 10 mol) wird in THF (17 L, getrocknet über Molsieb) unter Argon vorgelegt und auf -68 °C abgekühlt. Unter Rühren wird innerhalb von 1 h *n*-Butyllithium (2,5 M in Hexan, 4 L) bei -68 °C zugetropft und 1 h nachgerührt. Innerhalb von 30 min wird dann das Keton (1,319 kg, 10 mol) bei -68°C bis -54°C zugetropft und in Anschluss 15 min nachgerührt. Danach wird auf 9°C erwärmt und Wasser (2,9 L) wird in einer Portion zugegeben. Dabei steigt die Temperatur auf ca. 17°C an. Das Reaktionsgemisch wird bei 45°C/8 Torr gründlich eingeengt. Durch GC-Analytik wird sichergestellt, dass kein TMS-geschütztes Produkt mehr enthalten ist. Der Rückstand wird in Diethylether (750 mL) aufgeschlämmt, filtriert und der Filtrationsrückstand nochmals mit Diethylether gewaschen. Das Filtrat wird im Vakuum eingeengt. Es bleiben ca. 1,2 kg Rohmaterial als braune Flüssigkeit. Durch Vakuumdestillation (5 mbar) werden daraus bei 64-68 °C ca. 1,1 kg (7 mol, 70%) ethinyliertes Produkt als farbloses Öl erhalten.

Reinheit: >96% (GC-Flächen%)

### 2.) Ringschluss mit CO₂:

Der in Stufe 1 erhaltene Acetylenalkohol (1233 g; 7,79 mol) wird in Acetonitril (1,2 L) vorgelegt und in einem Rührautoklaven mit PMDETA (Pentamethyldiethylentriamin; 138,9 g; 0,8 mol) und AgOAc (12,9 g; 0,078 mol) versetzt. Es werden 50 bar CO₂ aufgepresst und 2,5 h gerührt. Die Temperatur steigt bis auf 75°C. Das Reaktionsgemisch wird nach Abkühlen auf Raumtemperatur auf Normaldruck entspannt, filtriert und bei 100°C/5 mbar eingeengt. Es bleiben ca. 1,5 kg Rohmaterial als braune Flüssigkeit. Durch Vakuumdestillation bei 5 mbar werden daraus bei 114-115°C ca. 1,39 kg des Carbonats als orangefarbenes Öl erhalten, welches (ggfs. Nach Zusatz einiger Impfkristalle) über Nacht durchkristallisiert. Die Kristallmasse wird mit Cyclohexan (1,34 L) verrührt, abgesaugt und der Rückstand nochmals mit Cyclohexan (0,45 L) nachgewaschen. Nach Trocknen im Vakuum werden 1,29 kg (6,38 mol, 64%) fast farbloser Feststoff erhalten.

Reinheit: >99% (GC-Flächen%)

### 3.) Umacetalisierung mit Trimethylolpropan:

Das dimethoxy-substituierte Carbonat aus Stufe 2 (250 g, 1,24 mol) wird in 1,4 L Acetonitril unter Argonatmosphäre vorgelegt. Dann werden 253 g (1,87 mol) Trimethylolpropan und 407 mg (0,002 mol) *p*-Toluolsulfonsäure-Hydrat zugegeben. Die Mischung wird 10 h unter Rückfluss erhitzt. Nach Abkühlen auf Raumtemperatur wird das Lösemittel im Vakuum entfernt und der Rückstand in ca. 1 L MTBE aufgenommen. Es wird viermal mit je 300 ml Wasser gewaschen. Die organische Phase wird über Natriumsulfat getrocknet, abfiltriert und am Rotationsverdampfer eingeengt. Anschließend wird bei 40°C im Ölpumpenvakuum für mehrere Stunden nachgetrocknet. Das Produkt wird als zähflüssiges, leicht gelbliches Öl (339 g) in Form zweier Isomere erhalten, welches bei längerem Stehen bei Raumtemperatur langsam kristallisiert.

Reinheit: >98% (GC-Flächen%)

### 4.) Acrylierung zum ExoVC-acrylat 2

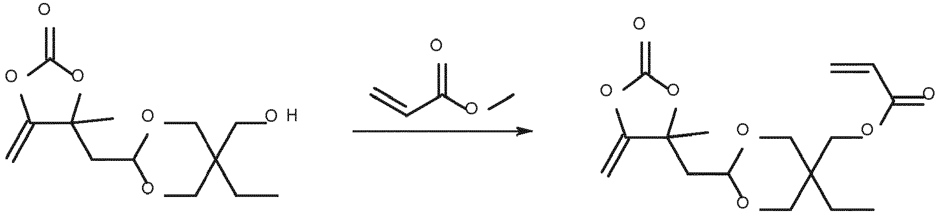

In einem zwei Liter Flachkolben mit Teflonrührer, Thermometer und Kühler wurden 129 g Exo-VC-PMP Alkohol (0.47 mol), 409 g Methylacrylat (4.75 mol) und 152 g Molekularsieb 5 Ǻ Pulver gegeben. Das Methylacrylat enthielt 0,3 g MeHQ (Monomethylether des Hydrochinons) als Inhibitor. Die Mischung wurde gerührt und auf 60°C erwärmt. 9,7 g des Enzyms Candida Antartica Lipase B (immobilisierte Form) wurden zugesetzt. Nach 72 Stunden wurden 100 g Molekularsieb 5 Ǻ Pulver und 9,7 g des Enzyms Candida Antartica Lipase B (immobilisierte Form) zugesetzt. Nach 96 Stunden wurde die Reaktionsmischung auf Raumtemperatur abgekühlt und filtriert. Methanol und nicht umgesetztes Methylacrylat wurden unter Vakuum abdestilliert.

Die Ausbeute betrug 153 g ExoVC-acrylat 2.

Reinheit: 97.1% (gaschromatographisch bestimmt)

### 3. Herstellungsbeispiele Copolymere

### 3.1 Copolymer aus ExoVC-acrylat 1 und n-Butylacrylat

In einer Polymerisationsapparatur bestehend aus Glasreaktor, Rückflusskühler, Rührer und Stickstoffeinlass werden in leichtem Stickstoffstrom 864,9 g Methylethylketon (MEK) vorgelegt und auf 80 °C erwärmt. Es werden 15 g einer Monomerenmischung bestehend aus 225 g n-Butylacrylat und 75 g ExoVC-acrylat 1 zugegeben. Nach Wiedererreichen von 80°C werden 1,7 g einer Starterlösung aus 4 g tert.-Butylperpivalat (75%ig in Mineralöl) und 30 g MEK zugegeben und 3 min anpolymerisiert. Dann werden die restlichen 285 g Monomerenmischung und 32,3 g Starterlösung in 3 h zugefahren. Anschließend wird die Temperatur auf 90°C erhöht und eine Lösung von 0,96 g tert.-Butylperpivalat (75%ig in Mineralöl) in 15 g MEK in 30 min zugegeben. Danach wird abgekühlt.

K-Wert; 1% in THF: 27

Feststoffgehalt: 22,9%

### 3.2 Analog zu Beispiel 1 kann ein Copolymer mit ExoVC-acrylat 2 hergestellt werden.

### 4. Zweikomponenten-Klebstoff

Das im Beispiel 3.1 beschriebene Copolymer wurde mit 2 Gew.% Isophorondiamin (IPDA) als Härter abgemischt und der resultierende reaktive zweikomponentige Klebstoff unmittelbar nach dem Mischen in einer Schichtdicke von 3 µm druckseitig auf eine bedruckte 12 µm starke Polyesterfolie aufgetragen. Das Lösungsmittel wurde mittels eines Heißluftstroms verdampft und dann wurde in einem Kalander eine 60 µm starke Polyethylenfolie, die zuvor mit einer KoronaBehandlung versehen worden war, unter einem Druck von 3 bar auf die Klebstoffschicht kaschiert. Das resultierende Laminat wurde in 15 mm breite Streifen geschnitten und von diesen Streifen wurde a) nach 1 min und b) nach 24 h die Schälfestigkeit bei Raumtemperatur (20 °C) ermittelt [N/15 mm]. Dazu bediente man sich einer Reißmaschine und führte die Schälfestigkeitsprüfung unter einem Reißwinkel von 90 ° durch (T-Test). Die Ergebnisse sind in Tabelle 1 wiedergegeben.

Analog kann ein Zweikomponenten-Klebstoff mit dem Copolymer des Beispiels 3.2 hergestellt und angewendet werden.

**Tabelle 1: Ergebnisse der Schälfestigkeitsmessungen**

| | Schälfestigkeit nach 1 min [N/15 mm] | Schälfestigkeit nach 24 h [N/15 mm] |
|---|---|---|
| Beispiel 3.1 abgemischt mit 2 Gew.% IPDA | 0,3 | 1,4 |
| Beispiel 3.1 ohne IPDA (Vergleich, 1K-Klebstoff) | <0,1 | <0,1 |

Eine Schälfestigkeit von grösser 0,2 N nach 1 min und grösser 1 N nach 24 h ist für Anwendungen des Klebstoffs in flexiblen Verpackungen ausreichend und baut sich in einer hinreichend kurzen Zeit auf, um industriell verwertbar zu sein.

## Patentansprüche

1. Copolymere, gebildet durch radikalische Copolymerisation aus
(a) mindestens einem Monomeren M1 der Formel 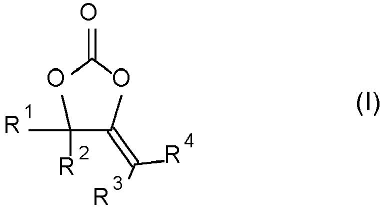 worin
R¹ für einen organischen Rest mit einer (Meth)acrylgruppe steht,
R², R³ und R⁴ unabhängig voneinander für ein H-Atom oder eine C1- bis C10-Alkylgruppe stehen; und
(b) mindestens einem, von den Monomeren M1 verschiedenen, ethylenisch ungesättigten, radikalisch copolymerisierbaren Monomer M2.

2. Copolymere gemäß Anspruch 1, **dadurch gekennzeichnet, dass** die Monomere M1 in einer Menge von 5 bis 50 Gew.%, bezogen auf die Gesamtmenge aller Monomere eingesetzt werden und dass die Monomere M2 in einer Menge von 50 bis 95 Gew.%, bezogen auf die Gesamtmenge aller Monomere eingesetzt werden.

3. Copolymere gemäß einem der vorhergehenden Ansprüche, **dadurch gekennzeichnet, dass** R¹ für einen organischen Rest mit insgesamt maximal 24 C-Atomen steht und außer Sauerstoffatomen keine weiteren Heteroatome enthält.

4. Copolymere gemäß einem der vorhergehenden Ansprüche, **dadurch gekennzeichnet, dass** R¹ eine Gruppe der Formel (II) 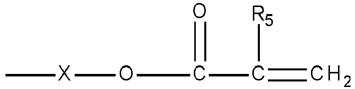 ist, worin X für eine Bindung oder eine Alkylengruppe mit 1 bis 18 C-Atomen und R⁵ für ein H-Atom oder eine Methylgruppe steht,
oder eine Gruppe der Formel (III) 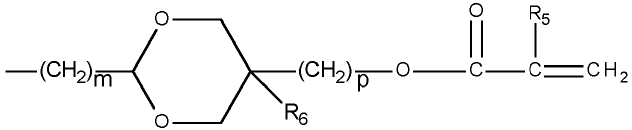 ist, worin m und p unabhängig voneinander für 0 oder eine ganze Zahl von 1 bis 10 stehen, R⁵ für ein H-Atom oder eine Methylgruppe steht und R⁶ für ein H-Atom oder eine C1-bis C10-Alkylgruppe steht,
oder eine Gruppe der Formel (IV) 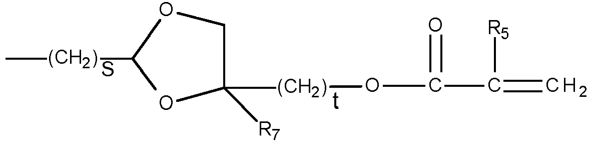 ist, worin s und t unabhängig voneinander für 0 oder eine ganze Zahl von 1 bis 10 stehen, R⁵ für ein H-Atom oder eine Methylgruppe steht und R⁷ für ein H-Atom oder eine C1- bis C10-Alkylgruppe steht.

5. Copolymere gemäß einem der vorhergehenden Ansprüche, **dadurch gekennzeichnet, dass** R² für eine Methylgruppe und R³ und R⁴ für ein H-Atom stehen.

6. Copolymere gemäß einem der vorhergehenden Ansprüche, **dadurch gekennzeichnet, dass** das mindestens eine Monomere M2 ausgewählt ist aus der Gruppe bestehend aus vinylaromatischen Kohlenwasserstoffen, Estern monoethylenisch ungesättigter C₃-C₈-Mono-carbonsäuren mit C₁-C₂₀-Alkanolen, C₅-C₈-Cycloalkanolen, Phenyl-C₁-C₄-alkanolen oder Phenoxy-C₁-C₄-alkanolen, Vinylestern aliphatischer Carbonsäuren mit 1 bis 20 C-Atomen und konjugiert diethylenisch ungesättigten C₄-C₁₀-Olefinen.

7. Copolymere gemäß einem der vorhergehenden Ansprüche, **dadurch gekennzeichnet, dass** sie eine Glasübergangstemperatur von -50 bis +20 °C aufweisen, gemessen durch Differential Scanning Calorimetrie gemäß ASTM D 3418-08 mit einer Heizrate von 20° C/min.

8. Zweikomponenten-Klebstoff, enthaltend eine erste Komponente enthaltend mindestens ein Copolymer gemäß einem der vorhergehenden Ansprüche und eine zweite Komponente enthaltend mindestens einen mehrfunktionellen Härter, welcher mindestens zwei funktionelle Gruppen aufweist ausgewählt aus primären Aminogruppen, sekundären Aminogruppen, Hydroxygruppen, Phosphingruppen, Phosphonatgruppen und Mercaptangruppen.

9. Zweikomponenten-Klebstoff gemäß dem vorhergehenden Anspruch, **dadurch gekennzeichnet, dass** das molare Verhältnis von Alkyliden-1,3-dioxolan-2-on-Gruppen des Copolymers zu den funktionellen Gruppen des Härters von 1 : 10 bis 10 : 1 beträgt.

10. Zweikomponenten-Klebstoff gemäß einem der Ansprüche 8 bis 9, **dadurch gekennzeichnet, dass** er frei von Isocyanaten ist und entweder in Form einer Lösung in einem organischen Lösungsmittel oder lösemittelfrei vorliegt.

11. Zweikomponenten-Klebstoff gemäß einem der Ansprüche 8 bis 10, **dadurch gekennzeichnet, dass** ein hiermit hergestelltes Laminat nach 1 Minute eine Schälfestigkeit von größer 0,2 N und eine Schlälfestigkeit von größer 1 N nach 24 Stunden aufweist, gemessen bei 20°C, wie in der Beschreibung angegeben.

12. Zweikomponenten-Klebstoff gemäß einem der Ansprüche 8 bis 11, **dadurch gekennzeichnet, dass** er mindestens einen Katalysator enthält für die Katalysierung der Reaktion der funktionellen Alkyliden-1,3-dioxolan-2-on-Gruppen des Copolymers mit den funktionellen Gruppen des Härters.

13. Verfahren zur Herstellung von Laminaten, wobei eine Folie unter Verwendung mindestens eines Copolymeren gemäß einem der Ansprüche 1 bis 7 oder unter Verwendung eines Zweikomponenten-Klebstoffs gemäß einem der Ansprüche 8 bis 12 auf ein Substrat kaschiert wird.

14. Verfahren nach dem vorhergehenden Anspruch, **dadurch gekennzeichnet, dass** das Substrat ausgewählt ist aus Polymerfolien, Metallfolien, Papier und Formkörpern aus Metall, Kunststoff oder Holz.

15. Laminat, hergestellt nach dem Verfahren gemäß einem der beiden vorhergehenden Ansprüche.

16. Verwendung von Copolymeren gemäß einem der Ansprüche 1 bis 7 als Komponenten von Klebstoffen, Lacken, Beschichtungen, Dichtungsmitteln, Farben und Tinten, und zur Bindung von Fasern und Partikeln.

17. Verwendung nach dem vorhergehenden Anspruch zur Herstellung von flexiblen Lebensmittelverpackungen.

## Claims

1. A copolymer formed by free-radical copolymerization from
(a) at least one monomer M1 of the formula 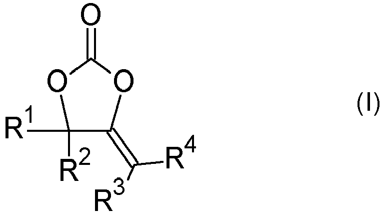 in which
R¹ is an organic radical having a (meth)acryloyl group,
R², R³ and R⁴ are each independently a hydrogen atom or a C1- to C10-alkyl group; and
(b) at least one ethylenically unsaturated, freeradically copolymerizable monomer M2 other than the monomers M1.

2. The copolymer according to claim 1, wherein the monomers M1 are used in an amount of 5% to 50% by weight, based on the total amount of all the monomers, and the monomers M2 are used in an amount of 50% to 95% by weight, based on the total amount of all the monomers.

3. The copolymer according to either of the preceding claims, wherein R¹ is an organic radical having a total of not more than 24 carbon atoms and, apart from oxygen atoms, does not comprise any further heteroatoms.

4. The copolymer according to any of the preceding claims, wherein R¹ is a group of the formula (II) 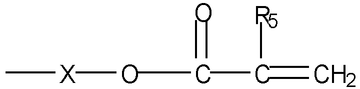 in which X is a bond or an alkylene group having 1 to 18 carbon atoms and R⁵ is a hydrogen atom or a methyl group,
or a group of the formula (III) 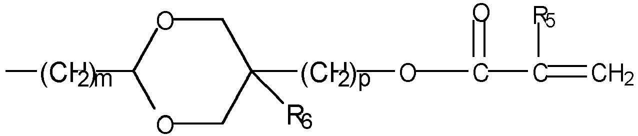 in which m and p are each independently 0 or a number from 1 to 10, R⁵ is a hydrogen atom or a methyl group and R⁶ is a hydrogen atom or a C1- to C10-alkyl group, or a group of the formula (IV) 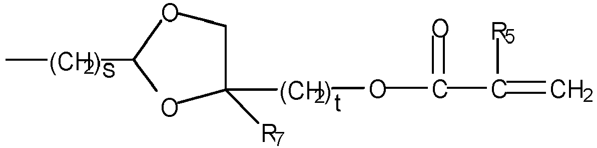 in which s and t are each independently 0 or an integer from 1 to 10, R⁵ is a hydrogen atom or a methyl group and R⁷ is a hydrogen atom or a C1- to C10-alkyl group.

5. The copolymer according to any of the preceding claims, wherein R² is a methyl group and R³ and R⁴ are each a hydrogen atom.

6. The copolymer according to any of the preceding claims, wherein the at least one monomer M2 is selected from the group consisting of vinylaromatic hydrocarbons, esters of monoethylenically unsaturated C₃-C₈ monocarboxylic acids with C₁-C₂₀-alkanols, C₅-C₈-cycloalkanols, phenyl-C₁-C₄-alkanols or phenoxy-C₁-C₄-alkanols, vinyl esters of aliphatic carboxylic acids having 1 to 20 carbon atoms and conjugated diethylenically unsaturated C₄-C₁₀ olefins.

7. The copolymer according to any of the preceding claims, which has a glass transition temperature of -50 to +20°C, measured by differential scanning calorimetry to ASTM D3418-08 at a heating rate of 20°C/min.

8. A two-component adhesive comprising a first component comprising at least one copolymer according to any of the preceding claims and a second component comprising at least one polyfunctional hardener having at least two functional groups selected from primary amino groups, secondary amino groups, hydroxyl groups, phosphine groups, phosphonate groups and mercaptan groups.

9. The two-component adhesive according to the preceding claim, wherein the molar ratio of alkylidene-1,3-dioxolan-2-one groups in the copolymer to the functional groups in the hardener is from 1:10 to 10:1.

10. The two-component adhesive according to either of claims 8 and 9, which is free of isocyanates and is either in the form of a solution in an organic solvent or in solvent-free form.

11. The two-component adhesive according to any of claims 8 to 10, wherein a laminate produced therewith has a peel strength of greater than 0.2 N after 1 minute and a peel strength of greater than 1 N after 24 hours, measured at 20°C, as specified in the description.

12. The two-component adhesive according to any of claims 8 to 11, which comprises at least one catalyst for the catalysis of the reaction of the functional alkylidene-1,3-dioxolan-2-one groups of the copolymer with the functional groups of the hardener.

13. A process for producing laminates, wherein a film is laminated onto a substrate using at least one copolymer according to any of claims 1 to 7 or using a two-component adhesive according to any of claims 8 to 12.

14. The process according to the preceding claim, wherein the substrate is selected from polymer films, metal foils, paper, and shaped bodies made from metal, plastic or wood.

15. A laminate produced by the process according to either of the two preceding claims.

16. The use of the copolymer according to any of claims 1 to 7 as components of adhesives, lacquers, coatings, sealants, paints and inks, and for binding of fibers and particles.

17. The use according to the preceding claim for production of flexible food packaging.

## Revendications

1. Copolymères, formés par copolymérisation radicalaire
(a) d'au moins un monomère M1 de formule 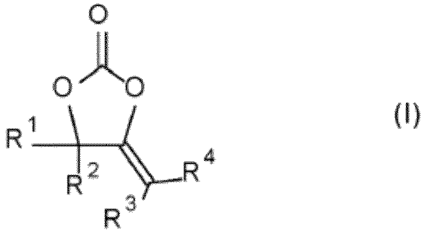 dans laquelle
R¹ représente un radical organique comportant un groupe (méth)acryle,
R², R³ et R⁴ représentent indépendamment les uns des autres un atome de H ou un groupe alkyle en C1 à C10 ; et
(b) d'au moins un monomère M2 copolymérisable par voie radicalaire, éthyléniquement insaturé, différents des monomères M1.

2. Copolymères selon la revendication 1, **caractérisés en ce que** les monomères M1 sont utilisés en une quantité de 5 à 50 % en poids, par rapport à la quantité totale de tous les monomères et **en ce que** les monomères M2 sont utilisés en une quantité de 50 à 95 % en poids, par rapport à la quantité totale de tous les monomères.

3. Copolymères selon l'une quelconque des revendications précédentes, **caractérisés en ce que** R¹ représente un radical organique comportant au total un maximum de 24 atomes de C et ne contient, outre des atomes d'oxygène, aucun autre hétéroatome.

4. Copolymères selon l'une quelconque des revendications précédentes, **caractérisés en ce que** R¹ est un groupe de formule (II) 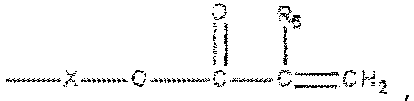 dans laquelle X représente une liaison ou un groupe alkylène comportant 1 à 18 atomes de C et R⁵ représente un atome de H ou un groupe méthyle,
ou est un groupe de formule (III) 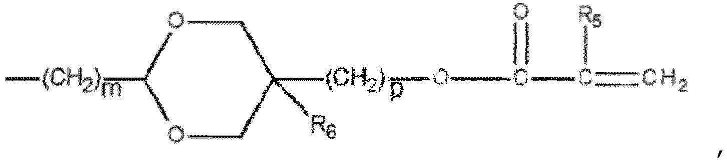 dans laquelle m et p représentent indépendamment l'un de l'autre 0 ou un nombre entier de 1 à 10, R⁵ représente un atome de H ou un groupe méthyle et R⁶ représente un atome de H ou un groupe alkyle en C1 à C10,
ou est un groupe de formule (IV) 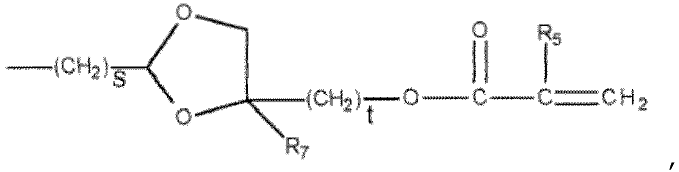 dans laquelle s et t représentent indépendamment l'un de l'autre 0 ou un nombre entier de 1 à 10, R⁵ représente un atome de H ou un groupe méthyle et R⁷ représente un atome de H ou un groupe alkyle en C1 à C10,

5. Copolymères selon l'une quelconque des revendications précédentes, **caractérisés en ce que** R² représente un groupe méthyle et R³ et R⁴ représentent un atome de H.

6. Copolymères selon l'une quelconque des revendications précédentes, **caractérisés en ce que** l'au moins un monomère M2 est choisi dans le groupe constitué par des hydrocarbures vinylaromatiques, des esters d'acides monocarboxyliques en C₃₋₈ monoéthyléniquement insaturés avec des alcanols en C₁₋₂₀, des cycloalcanols en C₅₋₈, des phényl-C₁₋₄ alcanols ou des phénoxy-C₁₋₄ alcanols, des esters de vinyle d'acides carboxyliques aliphatiques comportant 1 à 20 atomes de C et des oléfines en C₄₋₁₀ diéthyléniquement insaturées conjuguées.

7. Copolymères selon l'une quelconque des revendications précédentes, **caractérisés en ce qu'**ils présentent une température de transition vitreuse de -50 à +20 °C, mesurée par calorimétrie différentielle à balayage selon la norme ASTM D3418-08 avec une vitesse de chauffage de 20 °C/min.

8. Adhésif à deux composants, contenant un premier composant contenant au moins un copolymère selon l'une quelconque des revendications précédentes et un deuxième composant contenant au moins un agent de durcissement polyfonctionnel, qui présente au moins deux groupes fonctionnels choisis parmi des groupes amino primaire, des groupes amino secondaire, des groupes hydroxy, des groupes phosphine, des groupes phosphonate et des groupes mercaptan.

9. Adhésif à deux composants selon la revendication précédente, **caractérisé en ce que** le rapport molaire de groupes alkylidène-1,3-dioxolan-2-one du copolymère sur les groupes fonctionnels de l'agent de durcissement est de 1 : 10 à 10 : 1.

10. Adhésif à deux composants selon l'une quelconque des revendications 8 et 9, **caractérisé en ce qu'**il est exempt d'isocyanates et est présent soit sous la forme d'une solution dans un solvant organique, soit sans solvant.

11. Adhésif à deux composants selon l'une quelconque des revendications 8 à 10, **caractérisé en ce qu'**un stratifié préparé avec celui-ci présente après 1 minute une résistance au pelage supérieure à 0,2 N et une résistance au pelage supérieure à 1 N après 24 heures, mesurée à 20 °C, comme indiqué dans la description.

12. Adhésif à deux composants selon l'une quelconque des revendications 8 à 11, **caractérisé en ce qu'**il contient au moins un catalyseur pour la catalyse de la réaction des groupes fonctionnels alkylidène-1,3-dioxolan-2-one du copolymère avec les groupes fonctionnels de l'agent de durcissement.

13. Procédé pour la préparation de stratifiés, une feuille étant contrecollée sur un substrat en utilisant au moins un copolymère selon l'une quelconque des revendications 1 à 7 ou en utilisant un adhésif à deux composants selon l'une quelconque des revendications 8 à 12.

14. Procédé selon la revendication précédente, **caractérisé en ce que** le substrat est choisi parmi des feuilles de polymère, des feuilles métalliques, du papier et des corps moulés en métal, en matière plastique ou en bois.

15. Stratifié, préparé par un procédé selon l'une des deux revendications précédentes.

16. Utilisation de copolymères selon l'une quelconque des revendications 1 à 7 en tant que composants d'adhésifs, de laques, de revêtements, de moyens d'étanchéité, de peintures et d'encres, et pour la liaison de fibres et de particules.

17. Utilisation selon la revendication précédente pour la préparation d'emballages alimentaires flexibles.
